# EUROPÄISCHE PATENTSCHRIFT

(11) **EP 3 037 707 B1**
(45) Veröffentlichungstag und Bekanntmachung des Hinweises auf die Patenterteilung: **06.06.2018**
(21) Anmeldenummer: 15202541.7
(22) Anmeldetag: 23.12.2015
(51) Int. Cl.: F16L 21/08, F16L 21/00, F16L 21/06, F16L 25/00, F16L 25/14

(54) **VORRICHTUNG ZUM VERBINDEN ZWEIER ROHRFÖRMIGER ROHRELEMENTE**
DEVICE FOR THE CONNECTION OF TWO TUBULAR PIPE ELEMENTS
DISPOSITIF DE LIAISON DE DEUX ELEMENTS DE TUYAUX TUBULAIRES

(30) Priorität: 23.12.2014 DE 102014119501
(43) Veröffentlichungstag der Anmeldung: 29.06.2016
(73) Patentinhaber: Felber, Winfried, 86653 Monheim (DE)
(72) Erfinder: Felber, Winfried, 86653 Monheim (DE)
(74) Vertreter: Kohl, Fabian Hanno

(56) Entgegenhaltungen:
- EP-A1- 2 075 497
- WO-A1-2010/099569
- WO-A2-2006/076464
- US-A1- 2005 123 346

## Beschreibung

Die Erfindung betrifft eine Vorrichtung zum Verbinden zweier rohrförmiger Rohrelemente, insbesondere zweier Rohrleitungselemente, gleichen oder ungleichen Außendurchmessers.

Derartige Vorrichtungen zum Verbinden zweier rohrförmiger Rohrelemente, d. h. z. B. zweier von einem Fluid durchströmbarer Rohrleitungselemente, gleichen oder ungleichen Außendurchmessers sind dem Grunde nach bekannt. Bekannte Einsatzgebiete entsprechender Vorrichtungen liegen z. B. im Bereich des Tiefbaus, insbesondere des Rohrleitungsbaus, oder im Bereich der Abwasser- bzw. Sanitärtechnik.

Wesentliche Anforderungen an entsprechende Vorrichtungen sind insbesondere eine hohe mechanische Stabilität der über diese herstellbaren bzw. hergestellten Verbindung entsprechender rohrförmiger Rohrelemente sowie ein hohes Maß an Flexibilität bzw. Praktikabilität im Hinblick auf die Möglichkeit der Verbindung von außendurchmessermäßig unterschiedlich dimensionierten rohrförmigen Rohrelementen. Mit anderen Worten soll vermittels einer einzigen Vorrichtung grundsätzlich eine einfache und zuverlässige Verbindung einer Vielzahl an außendurchmessermäßig unterschiedlich dimensionierten rohrförmigen Rohrelementen möglich sein. Insbesondere soll es vermittels einer entsprechenden Vorrichtung auch möglich sein, zwei rohrförmige Rohrelemente mit deutlich unterschiedlichen Außendurchmessern einfach und zuverlässig zu verbinden.

EP 2 075 497 A1 offenbart eine Vorrichtung zum lösbaren Verbinden zweier Objekte, bei welchen es sich um Fluid führende Elemente, wie z. B. Schläuche oder Rohre, handeln kann. Die Vorrichtung umfasst zwei axial miteinander verbindbare Verbindungseinrichtungen.

WO 2006/076464 A2 offenbart miteinander lösbare Kupplungselemente zum Verbinden zweier Rohrelemente. Gemäß einem Ausführungsbeispiel können zwei erste Kupplungselemente einem ersten rohrförmigen Element zugeordnet sein und ein weiteres Kupplungselement einem weiteren rohrförmigen Element zugeordnet sein.

WO 2010/099569 A1 offenbart eine Mechanik zum Verbinden zweier Rohrelemente. Gemäß einem Ausführungsbeispiel kann die Mechanik eine Flanschanordnung zum Verbinden zweier Rohre umfassen.

US 2005/0123346 A1 offenbart eine Vorrichtung zum Verbinden von Strukturbauteilen. Gemäß einem Ausführungsbeispiel kann die Vorrichtung ein Paar von Kupplungselementen umfassen, welche jeweils einen inneren Kupplungskörper und einen äußeren Kupplungskörper umfassen.

Der Erfindung liegt die Aufgabe zugrunde, eine eine einfache und zuverlässige Verbindung zweier rohrförmiger Rohrelemente gleichen oder ungleichen Außendurchmessers ermöglichende Vorrichtung anzugeben.

Die Aufgabe wird durch eine Vorrichtung zum Verbinden zweier rohrförmiger Rohrelemente, insbesondere zweier Rohrleitungselemente, gleichen oder ungleichen Außendurchmessers gemäß Anspruch 1 gelöst.

Die hierin beschriebene Vorrichtung dient im Allgemeinen zum, typischerweise axialen, Verbinden zweier rohrförmiger Rohrelemente, insbesondere zweier von einem Fluid, d. h. einer Flüssigkeit oder einem Gas, durchströmbarer Rohrleitungselemente, gleichen oder unterschiedlichen Außendurchmessers. Über die Vorrichtung lassen sich also außendurchmessermäßig gleich oder ungleich dimensionierte Rohrelemente verbinden. Die zu verbindenden bzw. verbundenen Rohrelemente sind typischerweise mit jeweiligen jeweilige Stirnflächen bzw. -seiten bildenden Abschnitten einander gegenüber liegend, insbesondere auf Stoß, angeordnet und im Montagezustand der Vorrichtung unter Ausbildung einer axialen Verbindung außenumfangsseitig von der Vorrichtung umgriffen.

Die Vorrichtung umfasst eine Kupplungseinrichtung. Die Kupplungseinrichtung umfasst ein erstes hohlzylindrisches Kupplungseinrichtungsteil, im Weiteren abgekürzt als erstes Kupplungseinrichtungsteil bezeichnet, und ein zweites hohlzylindrisches Kupplungseinrichtungsteil, im Weiteren abgekürzt als zweites Kupplungseinrichtungsteil bezeichnet. Das erste Kupplungseinrichtungsteil und das zweite Kupplungseinrichtungsteil weisen typischerweise jeweils eine hohlzylindrische Grundform auf bzw. sind mit einer solchen ausgebildet bzw. zu einer solchen ausbildbar. Unter einer hohlzylindrischen Grundform sind grundsätzlich auch von einem geometrisch eindeutigen Hohlzylinder geringfügig abweichende geometrische Formen, wie z. B. Ellipsen, Ovale, etc., zu verstehen.

Das erste Kupplungseinrichtungsteil ist einem ersten Rohrelement zuordenbar bzw. zugeordnet (vgl. den Montagezustand der Vorrichtung). Das zweite Kupplungseinrichtungsteil ist einem mit dem ersten Rohrelement zu verbindenden bzw. verbundenen (vgl. den Montagezustand der Vorrichtung) zweiten Rohrelement zuordenbar bzw. zugeordnet (vgl. den Montagezustand der Vorrichtung).

An dem ersten Kupplungseinrichtungsteil ist wenigstens ein erstes Formschlusselement angeordnet oder ausgebildet. Das erste Kupplungseinrichtungsteil weist also wenigstens ein erstes Formschlusselement, typischerweise mehrere erste Formschlusselemente auf. An dem zweiten Kupplungseinrichtungsteil ist wenigstens ein zweites Formschlusselement angeordnet oder ausgebildet. Das zweite Kupplungseinrichtungsteil weist also wenigstens ein zweites Formschlusselement, typischerweise mehrere zweite Formschlusselemente auf. Das wenigstens eine zweite Formschlusselement korrespondiert typischerweise, jedoch nicht zwingend mit dem an dem ersten Kupplungseinrichtungsteil angeordneten oder ausgebildeten wenigstens einen ersten Formschlusselement.

Entsprechende an dem ersten Kupplungseinrichtungsteil angeordnete oder ausgebildete erste Formschlusselemente und entsprechende an dem zweiten Kupplungseinrichtungsteil angeordnete oder ausgebildete zweite Formschlusselemente sind dazu ausgebildet, unter Ausbildung einer axialen Verbindung des ersten Kupplungseinrichtungsteils mit dem zweiten Kupplungseinrichtungsteil formschlüssig zusammenzuwirken. Durch eine entsprechende axiale Verbindung des ersten Kupplungseinrichtungsteils mit dem zweiten Kupplungseinrichtungsteil ist selbstverständlich auch eine axiale Verbindung entsprechender dem ersten bzw. dem zweiten Kupplungseinrichtungsteil zuordenbarer bzw. zugeordneter erster bzw. zweiter Rohrelemente realisierbar bzw. realisiert.

Die Ausbildung einer axialen Verbindung jeweiliger Kupplungseinrichtungsteile erfolgt, wie erwähnt, durch formschlüssiges Zusammenwirken jeweiliger erster und zweiter Formschlusselemente. Jeweilige erste und zweite Formschlusselemente können dabei insbesondere axial und/oder umfangsmäßig formschlüssig zusammenwirken; in jedem Fall ist eine axiale Verbindung jeweiliger Kupplungseinrichtungsteile gewährleistet. Unter einem axialen formschlüssigen Zusammenwirken ist insbesondere ein axialer Eingriff eines ersten Formschlusselements eines ersten Kupplungseinrichtungsteils in ein, gegebenenfalls korrespondierendes, zweites Formschlusselement eines zweiten Kupplungseinrichtungsteils, oder umgekehrt, und eine sich hieraus ergebende axiale Verbindung jeweiliger Kupplungseinrichtungsteile zu verstehen. Konkret kann hierzu z. B. ein erstes Formschlusselement in Form eines axial von dem ersten Kupplungseinrichtungsteil vorspringenden Abschnitts axial in ein zweites Formschlusselement in Form eines zu dem vorspringenden Abschnitt, gegebenenfalls korrespondierenden, Aufnahmeabschnitts an dem zweiten Kupplungseinrichtungsteil greifen.

Unter einem umfangsmäßigen formschlüssigen Zusammenwirken ist insbesondere ein umfangsmäßiger Übergriff bzw. Überlapp eines ersten Formschlusselements eines ersten Kupplungseinrichtungsteils über ein, gegebenenfalls korrespondierendes, zweites Formschlusselement eines zweiten Kupplungseinrichtungsteils, oder umgekehrt, und eine sich hieraus ergebende axiale Verbindung jeweiliger Kupplungseinrichtungsteile zu verstehen. Konkret kann hierzu z. B. ein erstes Formschlusselement in Form eines in Umfangsrichtung von dem ersten Kupplungseinrichtungsteil abragenden Abschnitts ein zweites Formschlusselement in Form eines zu dem von dem ersten Kupplungseinrichtungsteil in Umfangsrichtung abragenden Abschnitt, gegebenenfalls korrespondierenden, in Umfangsrichtung abragenden Abschnitt des zweiten Kupplungseinrichtungsteils umfangsmäßig, d. h. in Umfangsrichtung, übergreifen bzw. überlappen.

Die über das formschlüssige Zusammenwirken jeweiliger erster und zweiter Formschlusselemente ausbildbare oder ausgebildete axiale Verbindung der beiden Kupplungseinrichtungsteile schließt bestimmte radiale und/oder umfangsmäßige Bewegungen der beiden Kupplungseinrichtungsteile relativ zueinander nicht aus. Insbesondere eine bestimmte radiale Bewegbarkeit der beiden Kupplungseinrichtungsteile relativ zueinander kann im Zusammenhang mit der Verbindung zweier Rohrelemente ungleichen Außendurchmessers zweckmäßig sein. Auf den Aspekt der radialen Bewegbarkeit der beiden Kupplungseinrichtungsteile relativ zueinander wird weiter unten im Zusammenhang mit an den jeweiligen Kupplungseinrichtungsteilen bzw. entsprechenden Kupplungseinrichtungsteilsegmenten angeordneten oder ausgebildeten Führungselementen näher eingegangen.

Grundsätzlich schließt das formschlüssige Zusammenwirken jeweiliger erster und zweiter Formschlusselemente andere Verbindungsartigen, d. h. insbesondere kraftschlüssige Verbindungsarten, jeweiliger Kupplungseinrichtungsteile nicht aus. Insbesondere ist es sonach möglich, dass durch das formschlüssige Zusammenwirken jeweiliger erster und zweiter Formschlusselemente auch ein gewisser axialer Kraftschluss jeweiliger Kupplungseinrichtungsteile realisiert sein kann. Mithin kann eine durch formschlüssiges Zusammenwirken jeweiliger erster und zweiter Formschlusselemente ausbildbare bzw. ausgebildete axiale Verbindung jeweiliger Kupplungseinrichtungsteile (zusätzlich) auch Eigenarten eines Kraftschlusses beinhalten. Die Kupplungseinrichtungsteile können daher axial form- und kraftschlüssig miteinander verbunden sein. Dies schließt wiederum eine gewisse radiale und/oder umfangsmäßige Bewegbarkeit jeweiliger

Kupplungseinrichtungsteile relativ zueinander, wie oben beschrieben, nicht aus.

Aus vorstehenden Ausführungen ergeben sich unterschiedliche geometrisch-konstruktive Ausführungsmöglichkeiten entsprechender erster und zweiter Formschlusselemente. Bei einem ersten Formschlusselement kann es sich z. B. um einen, insbesondere mit einem, bevorzugt pilzkopfförmig, hinterschnittenen freien Ende, ausgebildeten, vorspringenden Abschnitt oder um einen Aufnahmeabschnitt für einen solchen vorspringenden Abschnitt handeln. Bei einem ersten Formschlusselement kann es sich jedoch auch um ein in Umfangsrichtung von dem ersten Kupplungseinrichtungsteil oder einem im Weiteren noch zu erläuternden ersten Kupplungseinrichtungsteilsegment abragenden Übergriffs- oder Überlappungsabschnitt zur umfangsmäßigen zumindest abschnittsweisen Übergreifung bzw. Überlappung eines, gegebenenfalls korrespondierenden, in Umfangsrichtung abragenden Übergriffs- oder Überlappungsabschnitts des zweiten Kupplungseinrichtungsteils oder eines im Weiteren noch zu erläuternden zweiten Kupplungseinrichtungsteilsegments handeln.

Bei einem zweiten Formschlusselement kann es sich in analoger Weise z. B. ebenso um einen, insbesondere mit einem, bevorzugt pilzkopfförmig, hinterschnittenen freien Ende, ausgebildeten, vorspringenden Abschnitt oder um einen Aufnahmeabschnitt für einen solchen vorspringenden Abschnitt handeln. Bei einem zweiten Formschlusselement kann es sich jedoch auch um ein in Umfangsrichtung von dem zweiten Kupplungseinrichtungsteil oder einem im Weiteren noch zu erläuternden zweiten Kupplungseinrichtungsteilsegment abragenden Übergriffs- oder Überlappungsabschnitt zur umfangsmäßigen zumindest abschnittsweisen Übergreifung bzw. Überlappung eines, gegebenenfalls korrespondierenden, in Umfangsrichtung abragenden Übergriffs- oder Überlappungsabschnitts des ersten Kupplungseinrichtungsteils oder eines im Weiteren noch zu erläuternden ersten Kupplungseinrichtungsteilsegments handeln.

Selbstverständlich kann das erste Kupplungseinrichtungsteil in Umfangsrichtung, insbesondere in Umfangsrichtung unmittelbar abwechselnd, gleiche oder unterschiedliche erste Formschlusselemente und das zweite Kupplungseinrichtungsteil in Umfangsrichtung, insbesondere in Umfangsrichtung unmittelbar abwechselnd, gleiche oder unterschiedliche zweite Formschlusselemente aufweisen. Derart kann die Stabilität der über das formschlüssige Zusammenwirken jeweiliger erster und zweiter Formschlusselemente gebildeten axialen Verbindung der beiden Kupplungseinrichtungsteile, insbesondere gegenüber axial wirkenden Kräften, erhöht werden.

Die über jeweilige erste und zweite Formschlusselemente ausbildbare axiale Verbindung des ersten Kupplungseinrichtungsteils mit dem zweiten Kupplungseinrichtungsteil kann (beschädigungs- bzw. zerstörungsfrei) lösbar oder nicht (beschädigungs- bzw. zerstörungsfrei) lösbar, d. h. unlösbar, sein. Ob die über jeweilige erste und zweite Formschlusselemente ausbildbare axiale Verbindung des ersten Kupplungseinrichtungsteils mit dem zweiten Kupplungseinrichtungsteil lösbar oder unlösbar ist, bestimmt sich insbesondere aus der konkreten geometrisch-konstruktiven Auslegung der ersten und zweiten Formschlusselemente. Im Hinblick auf eine nicht lösbare bzw. unlösbare axiale Verbindung können die ersten und/oder die zweiten Formschlusselemente mit Befestigungselementen, z. B. in Form von Rast- oder Spannelementen, versehen sein, welche Befestigungselemente derart (zusammen)wirken, dass jeweilige erste und zweite Formschlusselemente ohne Beschädigung bzw. Zerstörung nicht voneinander gelöst werden können.

Das erste Kupplungseinrichtungsteil und/oder das zweite Kupplungseinrichtungsteil können jeweils einstückig bzw. einteilig ausgebildet sein. Das erste Kupplungseinrichtungsteil bzw. das zweite Kupplungseinrichtungsteil kann sonach aus einem hohlzylindrischen, insbesondere ringförmigen, Körper mit daran angeordneten oder ausgebildeten ersten bzw. zweiten Formschlusselementen gebildet sein.

Gleichwohl ist es auch möglich, dass das erste Kupplungseinrichtungsteil und/oder das zweite Kupplungseinrichtungsteil jeweils mehrstückig bzw. mehrteilig ausgebildet ist. Die mehrstückige bzw. mehrteilige Ausbildung des ersten Kupplungseinrichtungsteils und/oder des zweiten Kupplungseinrichtungsteils ist insbesondere im Hinblick auf die Handhabbarkeit und somit die Praktikabilität der Vorrichtung sowie unter fertigungstechnischen und somit wirtschaftlichen Aspekten vorteilhaft.

In einer mehrstückigen bzw. mehrteiligen Ausführung kann das erste Kupplungseinrichtungsteil umfangsmäßig segmentiert ausgebildet sein. Das erste Kupplungseinrichtungsteil kann dabei aus mehreren in Umfangsrichtung zu dem ersten Kupplungseinrichtungsteil verbindbaren oder (insbesondere im Montagezustand der Vorrichtung) verbundenen ersten Kupplungseinrichtungsteilsegmenten gebildet sein. Entsprechend kann das zweite Kupplungseinrichtungsteil in einer mehrstückigen bzw. mehrteiligen Ausführung umfangsmäßig segmentiert ausgebildet sein. Das zweite Kupplungseinrichtungsteil kann dabei entsprechend aus mehreren in Umfangsrichtung zu dem zweiten Kupplungseinrichtungsteil verbindbaren oder (insbesondere im Montagezustand der Vorrichtung) verbundenen zweiten Kupplungseinrichtungsteilsegmenten gebildet sein.

Ein entsprechendes erstes Kupplungseinrichtungsteilsegment kann wenigstens einen stegförmigen Grundabschnitt, im Weiteren abgekürzt als Grundabschnitt bezeichnet, aufweisen. Ein entsprechender Grundabschnitt erstreckt sich im Montagezustand der Vorrichtung mit seiner Längsachse typischerweise in axialer Richtung. An einem ersten freien axialen Ende oder im Bereich eines ersten freien axialen Endes des Grundabschnitts kann wenigstens ein erstes Formschlusselement angeordnet oder ausgebildet sein. Es ist an dieser Stelle anzumerken, dass ein erstes Kupplungseinrichtungsteilsegment mit einem (einzigen) Grundabschnitt mit wenigstens einem an einem ersten freien axialen Ende oder im Bereich eines ersten freien axialen Endes des Grundabschnitts angeordneten oder ausgebildeten ersten Formschlusselement als eine Grundbaueinheit zur Ausbildung eines entsprechend segmentierten ersten Kupplungseinrichtungsteils erachtet werden kann. Entsprechend kann ein erstes Kupplungseinrichtungsteil aus einer Mehrzahl an in Umfangsrichtung zu verbindenden bzw. verbundenen, vergleichsweise einfach gestalteten, einzelnen ersten Kupplungseinrichtungsteilsegmenten ausgebildet bzw. zusammengesetzt werden.

In analoger Weise kann auch ein zweites Kupplungseinrichtungsteilsegment wenigstens einen stegförmigen Grundabschnitt, im Weiteren ebenso abgekürzt als Grundabschnitt bezeichnet, aufweisen. Ein entsprechender Grundabschnitt erstreckt sich im Montagezustand der Vorrichtung mit seiner Längsachse typischerweise in axialer Richtung. An einem ersten freien axialen Ende oder im Bereich eines ersten freien axialen Endes des Grundabschnitts kann wenigstens ein zweites Formschlusselement angeordnet oder ausgebildet sein. In analoger Weise ist auch hier anzumerken, dass ein zweites Kupplungseinrichtungsteilsegment mit einem (einzigen) Grundabschnitt mit wenigstens einem an einem ersten freien axialen Ende oder im Bereich eines ersten freien axialen Endes des Grundabschnitts angeordneten oder ausgebildeten zweiten Formschlusselement als eine Grundbaueinheit zur Ausbildung eines entsprechend segmentierten zweiten Kupplungseinrichtungsteils erachtet werden kann. Entsprechend kann ein zweites Kupplungseinrichtungsteil aus einer Mehrzahl an in Umfangsrichtung zu verbindenden bzw. verbundenen, vergleichsweise einfach gestalteten, einzelnen zweiten Kupplungseinrichtungsteilsegmenten ausgebildet bzw. zusammengesetzt werden.

Ein erstes Kupplungseinrichtungsteilsegment kann auch mehrere Grundabschnitte aufweisen. Die Grundabschnitte erstrecken sich im Montagezustand der Vorrichtung mit ihrer Längsachse typischerweise in axialer Richtung. Die Grundabschnitte können parallel oder winklig geneigt zueinander verlaufend angeordnet sein. Eine winklige Anordnung entsprechender Grundabschnitte bedeutet in einer Aufsicht auf die Vorrichtung typischerweise eine V-artige oder V-Schlitz-artige Anordnung zweier in Umfangsrichtung unmittelbar benachbart angeordneter Grundabschnitte. Die Grundabschnitte bilden dabei die Schenkel des "V". Je nach Blickrichtung kann das durch zwei unmittelbar benachbart angeordnete Grundabschnitte gebildete "V" axial in die eine oder in die andere Richtung geöffnet sein. Eine winklige Anordnung entsprechender unmittelbar benachbart angeordneter Grundabschnitte kann im Montagezustand der Vorrichtung aufgehoben sein, da die Grundabschnitte im Montagezustand der Vorrichtung typischerweise in Umfangsrichtung derart gegeneinander verspannt sein können, dass diese in paralleler Ausrichtung, insbesondere unmittelbar aneinander anliegend, angeordnet sind.

Unabhängig von der geometrischen Anordnung zweier in Umfangsrichtung unmittelbar benachbart angeordneter Grundabschnitte eines ersten Kupplungseinrichtungsteilsegments, können zwei in Umfangsrichtung unmittelbar benachbart angeordnete Grundabschnitte an dem ersten freien axialen Ende oder im Bereich des ersten freien axialen Endes des ersten Kupplungseinrichtungsteilsegments über einen Verbindungsabschnitt, insbesondere in Umfangsrichtung, miteinander verbunden sein. Ein entsprechender Verbindungsabschnitt gewährleistet eine Verbindung wenigstens zweier in Umfangsrichtung benachbart angeordneter Verbindungsabschnitte in Umfangsrichtung. Ein entsprechender Verbindungsabschnitt kann eine plattenartige bzw. -förmige geometrische Gestalt aufweisen. An einem entsprechenden Verbindungsabschnitt kann wenigstens ein erstes Formschlusselement angeordnet oder ausgebildet sein.

Grundsätzlich ist es auch möglich, dass zwei in Umfangsrichtung unmittelbar benachbart angeordnete Grundabschnitte an einem dem ersten freien axialen Ende gegenüber liegenden zweiten freien axialen Ende oder im Bereich eines solchen zweiten freien axialen Endes eines ersten Kupplungseinrichtungsteilsegments über einen weiteren Verbindungsabschnitt, insbesondere in Umfangsrichtung, miteinander verbunden sind. Ein entsprechender weiterer Verbindungsabschnitt kann ebenso eine plattenartige bzw. - förmige geometrische Gestalt aufweisen. Entsprechende an oder im Bereich eines ersten freien axialen Endes angeordnete oder ausgebildete Verbindungsabschnitte und entsprechende an oder im Bereich eines zweiten freien axialen Endes angeordnete oder ausgebildete weitere Verbindungsabschnitte können in Umfangsrichtung, insbesondere um wenigstens einen Grundabschnitt, d. h. um die Breite eines Grundabschnitts, versetzt zueinander angeordnet sein.

Selbstverständlich kann ein zweites Kupplungseinrichtungsteilsegment in analoger Weise mehrere Grundabschnitte aufweisen. Die Grundabschnitte erstrecken sich im Montagezustand der Vorrichtung mit ihrer Längsachse typischerweise in axialer Richtung. Die Grundabschnitte können parallel oder winklig geneigt zueinander verlaufend angeordnet sein. Eine winklige Anordnung entsprechender Grundabschnitte bedeutet auch hier in einer Aufsicht auf die Vorrichtung typischerweise eine V-artige oder V-Schlitz-artige Anordnung zweier in Umfangsrichtung unmittelbar benachbart angeordneter Grundabschnitte. Die Grundabschnitte bilden dabei die Schenkel des "V". Je nach Blickrichtung kann das durch zwei unmittelbar benachbart angeordnete Grundabschnitte gebildete "V" axial in die eine oder in die andere Richtung geöffnet sein. Eine winklige Anordnung entsprechender unmittelbar benachbart angeordneter Grundabschnitte kann auch hier im Montagezustand der Vorrichtung aufgehoben sein, da die Grundabschnitte im Montagezustand typischerweise in Umfangsrichtung derart gegeneinander verspannt sein können, dass diese in paralleler Ausrichtung, insbesondere unmittelbar aneinander anliegend, angeordnet sind.

Unabhängig von der geometrischen Anordnung zweier in Umfangsrichtung unmittelbar benachbart angeordneter Grundabschnitte eines zweiten Kupplungseinrichtungsteilsegments, können zwei in Umfangsrichtung unmittelbar benachbart angeordnete Grundabschnitte an dem ersten freien axialen Ende oder im Bereich des ersten freien axialen Endes des zweiten Kupplungseinrichtungsteilsegments über einen Verbindungsabschnitt, insbesondere in Umfangsrichtung, miteinander verbunden sein. Ein entsprechender Verbindungsabschnitt gewährleistet eine Verbindung wenigstens zweier in Umfangsrichtung benachbart angeordneter Verbindungsabschnitte in Umfangsrichtung. Ein entsprechender Verbindungsabschnitt kann eine plattenartige bzw. -förmige geometrische Gestalt aufweisen. An einem entsprechenden Verbindungsabschnitt kann wenigstens ein zweites Formschlusselement angeordnet oder ausgebildet sein.

Grundsätzlich ist es auch hier möglich, dass zwei in Umfangsrichtung unmittelbar benachbart angeordnete Grundabschnitte an einem dem ersten freien axialen Ende gegenüber liegenden zweiten freien axialen Ende oder im Bereich eines solchen zweiten freien axialen Endes eines zweiten Kupplungseinrichtungsteilsegments über einen weiteren Verbindungsabschnitt, insbesondere in Umfangsrichtung, miteinander verbunden sind. Ein entsprechender weiterer Verbindungsabschnitt kann ebenso eine plattenartige bzw. -förmige geometrische Gestalt aufweisen. Entsprechende an oder im Bereich eines ersten freien axialen Endes angeordnete oder ausgebildete Verbindungsabschnitte und entsprechende an oder im Bereich eines zweiten freien axialen Endes angeordnete oder ausgebildete weitere Verbindungsabschnitte können in Umfangsrichtung um wenigstens einen Grundabschnitt versetzt zueinander angeordnet sein.

Es ist denkbar, dass wenigstens zwei in Umfangsrichtung unmittelbar benachbart angeordnete Grundabschnitte eines ersten Kupplungseinrichtungsteilsegments an oder im Bereich ihrer jeweiligen ersten freien Enden gegenüber liegenden zweiten freien axialen Enden über ein, insbesondere bügelartiges bzw. -förmiges, Verbindungselement, insbesondere in Umfangsrichtung, miteinander verbunden sind. Sofern entsprechende weitere Verbindungsabschnitte vorgesehen sind, dienen entsprechende Verbindungselemente insbesondere dazu, zwei in Umfangsrichtung unmittelbar benachbart angeordnete weitere Verbindungsabschnitte in Umfangsrichtung miteinander zu verbinden. Entsprechende Verbindungselemente dienen insbesondere dazu, eine radiale Aufspreizung bzw. eine radiale Verschiebung jeweiliger Grundabschnitte im Bereich des zweiten freien axialen Endes zu unterbinden. Weiterhin dienen entsprechende Verbindungselemente insbesondere dazu, insbesondere in Umfangsrichtung wirkende, Druck- und/oder Spannkräfte im Montagezustand des ersten Kupplungseinrichtungsteilsegments respektive im Montagezustand der Vorrichtung aufzunehmen.

Entsprechende Verbindungselemente können aus mehreren Verbindungselementsegmenten gebildet sein bzw. mehrere Verbindungselementsegmente umfassen. Entsprechende Verbindungselementsegmente können dem Verbindungselement Flexibilität in diversen Freiheitsgraden, d. h. insbesondere in axialer Richtung, in radialer Richtung und in Umfangsrichtung, verleihen, sodass die durch das Verbindungselement miteinander verbundenen Zwischenverbindungsteile beliebig relativ zueinander bewegbar sind. Insbesondere sind Stauch- bzw. Streckbewegungen des Verbindungselements möglich, sodass umfangsmäßig benachbarte Zwischenverbindungsteile in Umfangsrichtung um ein gewisses Maß angenähert oder um ein gewisses Maß voneinander entfernt werden können.

Entsprechende Verbindungselementsegmente können aus einem im Vergleich zu den Zwischenverbindungsteilen elastisch-flexibleren Material, z. B. einem spritzgießfähigen und somit im Rahmen eines Spritzgießprozesses verarbeitbaren thermoplastischen Elastomer (z. B. im Vergleich zu einem vergleichsweise starren Polymer, wie z. B. Polyamid, Polycarbonat etc. zur Ausbildung jeweiliger Zwischenverbindungsteile), ausgebildet bzw. mit einer, z. B. durch Schlitze gebildeten, elastisch-flexibleren Materialstruktur versehen sein. Selbstverständlich ist es auch möglich, jeweilige Verbindungselementsegmente und jeweilige Zwischenverbindungsteile aus dem gleichen Material herzustellen, was fertigungstechnische Vorteile bedeuten kann.

Entsprechende Verbindungselemente können daher in Umfangsrichtung zumindest abschnittsweise elastisch-federnd ausgebildet sein. Die elastisch-federnden Eigenschaften entsprechender Verbindungselemente können durch konstruktive Paramater, wie insbesondere Wandstärken, im Hinblick auf eine konkrete Anwendungssituation eines ersten Kupplungseinrichtungsteilsegments respektive der Vorrichtung gezielt beeinflusst werden. Die elastisch-federnden Eigenschaften können konstruktiv beispielsweise durch eine bügelartige bzw. -förmige, allgemein gewölbte Ausführung entsprechender Verbindungselemente realisiert sein. Die Wölbung kann axial betrachtet in Richtung des ersten oder zweiten freien axialen Endes des ersten Kupplungseinrichtungsteilsegments ausgerichtet sein. Selbstverständlich können entsprechende elastisch-federnde Eigenschaften entsprechender Verbindungselemente z. B. auch durch eine V-artige bzw. -förmige Ausführung realisiert sein.

In analoger Weise ist es denkbar, dass wenigstens zwei in Umfangsrichtung unmittelbar benachbart angeordnete Grundabschnitte eines zweiten Kupplungseinrichtungsteilsegments an oder im Bereich ihrer jeweiligen ersten freien Enden gegenüber liegenden zweiten freien axialen Enden über ein, insbesondere bügelartiges bzw.-förmiges, Verbindungselement, insbesondere in Umfangsrichtung, miteinander verbunden sind. Sofern entsprechende weitere Verbindungsabschnitte vorgesehen sind, dienen entsprechende Verbindungselemente insbesondere dazu, zwei in Umfangsrichtung unmittelbar benachbart angeordnete weitere Verbindungsabschnitte in Umfangsrichtung miteinander zu verbinden. Entsprechende Verbindungselemente dienen insbesondere dazu, eine radiale Aufspreizung bzw. eine radiale Verschiebung jeweiliger Grundabschnitte im Bereich des zweiten freien axialen Endes zu unterbinden. Weiterhin dienen entsprechende Verbindungselemente insbesondere dazu, insbesondere in Umfangsrichtung wirkende, Druck- und/oder Spannkräfte im Montagezustand des zweiten Kupplungseinrichtungsteilsegments respektive im Montagezustand der Vorrichtung aufzunehmen.

Entsprechende Verbindungselemente können daher ebenso in Umfangsrichtung zumindest abschnittsweise elastisch-federnd ausgebildet sein. Die elastisch-federnden Eigenschaften entsprechender Verbindungselemente können durch konstruktive Paramater, wie insbesondere Wandstärken, im Hinblick auf eine konkrete Anwendungssituation eines zweiten Kupplungseinrichtungsteilsegments respektive der Vorrichtung gezielt beeinflusst werden. Die elastisch-federnden Eigenschaften können konstruktiv beispielsweise durch eine bügelartige bzw. -förmige, allgemein gewölbte Ausführung entsprechender Verbindungselemente realisiert sein. Die Wölbung kann axial betrachtet in Richtung des ersten oder zweiten freien axialen Endes des zweiten Kupplungseinrichtungsteilsegments ausgerichtet sein. Selbstverständlich können entsprechende elastisch-federnde Eigenschaften entsprechender Verbindungselemente z. B. auch durch eine V-artige bzw. -förmige Ausführung realisiert sein.

An oder im Bereich des ersten freien axialen Endes des wenigstens einen Grundabschnitts wenigstens eines ersten Kupplungseinrichtungsteilsegments kann ein gegenüber dem Grundabschnitt radial (nach Außen) erhöhter erster laschenartiger Halteabschnitt und an oder im Bereich eines dem ersten freien axialen Ende gegenüber liegenden zweiten freien axialen Endes des wenigstens einen Grundabschnitts des wenigstens einen ersten Kupplungseinrichtungsteilsegments kann ein gegenüber dem Grundabschnitt radial (nach Außen) erhöhter zweiter laschenartiger Halteabschnitt ausgebildet sein. Durch den wenigstens einen ersten laschenartigen Halteabschnitt und den wenigstens einen zweiten laschenartigen Halteabschnitt kann ein Halterungsbereich zur Halterung eines Teils eines das erste Kupplungseinrichtungsteil, insbesondere in Umfangsrichtung, verspannenden, band-, manschetten- oder schellenartigen, Spannelements ausgebildet sein. Jeweilige laschenartige Halteabschnitte bilden einen jeweiligen axialen Anschlag für ein entsprechendes Spannelement und können daher einen auch als "Spannelementkanal" zu bezeichnenden bzw. zu erachtenden kanalartigen bzw. -förmigen Halterungsbereich zur Halterung eines Teils eines entsprechenden Spannelements definieren. Ein entsprechender Halterungsbereich kann in einem Längsschnitt durch die Vorrichtung beispielsweise eine U-Form aufweisen. Selbstverständlich ist es möglich, dass nur entsprechende erste laschenartige Halterungsabschnitte oder nur entsprechende zweite laschenartige Halterungsabschnitte vorgesehen sind, welche jeweils einen jeweiligen axialen Anschlag für ein entsprechendes Spannelement bilden.

In analoger Weise kann an oder im Bereich des ersten freien axialen Endes des wenigstens einen Grundabschnitts wenigstens eines zweiten Kupplungseinrichtungsteilsegments ein gegenüber dem Grundabschnitt radial (nach Außen) erhöhter erster laschenartiger Halteabschnitt und an oder im Bereich eines dem ersten freien axialen Ende gegenüber liegenden zweiten freien axialen Endes des wenigstens einen Grundabschnitts des wenigstens einen zweiten Kupplungseinrichtungsteilsegments ein gegenüber dem Grundabschnitt radial (nach Außen) erhöhter zweiter laschenartiger Halteabschnitt ausgebildet sein. Durch den wenigstens einen ersten laschenartigen Halteabschnitt und den wenigstens einen zweiten laschenartigen Halteabschnitt kann ein Halterungsbereich zur Halterung eines Teils eines das zweite Kupplungseinrichtungsteil, insbesondere in Umfangsrichtung, verspannenden, band-, manschetten- oder schellenartigen, Spannelements ausgebildet sein. Jeweilige laschenartige Halteabschnitte bilden einen jeweiligen axialen Anschlag für ein entsprechendes Spannelement und können daher einen auch als "Spannelementkanal" zu bezeichnenden bzw. zu erachtenden kanalartigen bzw. -förmigen Halterungsbereich zur Halterung eines Teils eines entsprechenden Spannelements definieren. Ein entsprechender Halterungsbereich kann in einem Längsschnitt durch die Vorrichtung beispielsweise eine U-Form aufweisen. Selbstverständlich ist es möglich, dass nur entsprechende erste laschenartige Halterungsabschnitte oder nur entsprechende zweite laschenartige Halterungsabschnitte vorgesehen sind, welche jeweils einen jeweiligen axialen Anschlag für ein entsprechendes Spannelement bilden.

An wenigstens einem ersten laschenartigen Halteabschnitt, insbesondere an zwei in Umfangsrichtung benachbart angeordneten ersten laschenartigen Halteabschnitten, eines ersten Kupplungseinrichtungsteilsegments kann ferner wenigstens ein in Umfangsrichtung flügelartig abragendes Anlaufelement angeordnet oder ausgebildet sein. Ein entsprechendes in Umfangsrichtung flügelartig abragendes Anlaufelement ist im Montagezustand des ersten Kupplungseinrichtungsteils respektive im Montagezustand der Vorrichtung in Umfangsrichtung gegen einen diesem gegenüber liegenden Abschnitt des zweiten Kupplungseinrichtungsteils verspannbar bzw. verspannt. Entsprechende Anlaufelemente ermöglichen daher eine eine stabile axiale Verbindung jeweiliger Rohrelemente fördernde umfangsmäßige Verspannung des ersten Kupplungseinrichtungsteils gegen ein zweites Kupplungseinrichtungsteil. Entsprechende flügelartige Anlaufelemente eines ersten Kupplungseinrichtungsteilsegments können z. B. im Bereich eines eine Aufnahme für ein gegengleiches zweites Formschlusselement bildenden ersten Formschlusselements angeordnet oder ausgebildet sein. Entsprechende Anlaufelemente können, sofern vorhanden, identisch mit entsprechenden weiter oben genannten Übergriffs- oder Überlappungsabschnitten sein.

In analoger Weise kann an wenigstens einem ersten laschenartigen Halteabschnitt, insbesondere an zwei in Umfangsrichtung benachbart angeordneten ersten laschenartigen Halteabschnitten, eines zweiten Kupplungseinrichtungsteilsegments wenigstens ein in Umfangsrichtung flügelartig abragendes Anlaufelement angeordnet oder ausgebildet sein. Ein entsprechendes in Umfangsrichtung flügelartig abragendes Anlaufelement ist im Montagezustand des zweiten Kupplungseinrichtungsteils respektive im Montagezustand der Vorrichtung in Umfangsrichtung gegen einen diesem gegenüber liegenden Abschnitt des ersten Kupplungseinrichtungsteils verspannbar bzw. verspannt. Entsprechende Anlaufelemente ermöglichen daher eine eine stabile axiale Verbindung jeweiliger Rohrelemente fördernde umfangsmäßige Verspannung des zweiten Kupplungseinrichtungsteils gegen ein erstes Kupplungseinrichtungsteil. Entsprechende Anlaufelemente eines zweiten Kupplungseinrichtungsteilsegments können z. B. im Bereich eines eine Aufnahme für ein gegengleiches erstes Formschlusselement bildenden zweiten Formschlusselements angeordnet oder ausgebildet sein. Entsprechende Anlaufelemente können auch hier, sofern vorhanden, identisch mit entsprechenden weiter oben genannten Übergriffs- oder Überlappungsabschnitten sein.

Entsprechende Anlaufelemente können eine in radialer Richtung, insbesondere zumindest abschnittsweise konisch bzw. rampenförmig oder zumindest abschnittsweise gebogen bzw. gewölbt, nach Außen (vgl. die erwähnte hohlzylindrische Grundform eines jeweiligen Kupplungseinrichtungsteils) ansteigende geometrische Gestalt aufweisen. In Umfangsrichtung benachbart angeordnete Anlaufelemente eines ersten Kupplungseinrichtungsteilsegments oder eines zweiten Kupplungseinrichtungsteilsegments können in Umfangsrichtung in entgegengesetzten Richtungen ausgerichtet sein; ein erstes Anlaufelement kann also z. B. eine im Uhrzeigersinn ausgerichtete, in radialer Richtung nach Außen ansteigende geometrische Gestalt aufweisen, ein in Umfangsrichtung benachbart angeordnetes zweites Anlaufelement kann entsprechend eine im Gegenuhrzeigersinn ausgerichtete, in radialer Richtung nach Außen ansteigende geometrische Gestalt aufweisen.

Um eine zur Ausbildung des ersten Kupplungseinrichtungsteils erforderliche umfangsmäßige Verbindung jeweiliger erster Kupplungseinrichtungsteilsegmente zu realisieren, kann an wenigstens einem Grundabschnitt eines ersten Kupplungseinrichtungsteilsegments ein Verbindungselement zum umfangsmäßigen Verbinden des ersten Kupplungseinrichtungsteilsegments mit einem, gegebenenfalls korrespondierenden, Verbindungselement eines weiteren ersten Kupplungseinrichtungsteilsegments angeordnet oder ausgebildet sein. Ein entsprechendes Verbindungselement kann z. B. als radialer, insbesondere zapfenartiger, gegebenenfalls hinterschnittener, Rastvorsprung, ein korrespondierendes Verbindungselement als eine, insbesondere durchbrechungsartige, Rastaufnahme für den Rastvorsprung ausgebildet sein.

Mit dem gleichen Zweck kann in analoger Weise an wenigstens einem Grundabschnitt eines zweiten Kupplungseinrichtungsteilsegments ein Verbindungselement zum umfangsmäßigen Verbinden des zweiten Kupplungseinrichtungsteilsegments mit einem, gegebenenfalls korrespondierenden, Verbindungselement eines weiteren zweiten Kupplungseinrichtungsteilsegments angeordnet oder ausgebildet sein. Ein entsprechendes Verbindungselement kann auch hier z. B. als radialer, insbesondere zapfenartiger, gegebenenfalls hinterschnittener, Rastvorsprung, ein korrespondierendes Verbindungselement als eine, insbesondere durchbrechungsartige, Rastaufnahme für den Rastvorsprung ausgebildet sein.

Jeweilige erste Kupplungseinrichtungsteilsegmente zur Ausbildung des bzw. eines ersten Kupplungseinrichtungsteils und jeweilige zweite Kupplungseinrichtungsteilsegmente zur Ausbildung des bzw. eines zweiten Kupplungseinrichtungsteils können identisch, d. h. mit identischen geometrischen Abmessungen, d. h. insbesondere mit identischer geometrischer Form, ausgebildet sein. Hieraus ergibt sich ein besonders vorteilhafter Aspekt der Vorrichtung, welcher darin zu sehen ist, dass mit mehreren geometrisch identischen Bauelementen eines einzigen Typs ein komplettes erstes Kupplungseinrichtungsteil, ein komplettes zweites Kupplungseinrichtungsteil und somit eine komplette Kupplungseinrichtung ausgebildet bzw. zusammengesetzt werden kann. Es ist mithin nur ein einziger Bauteiltyp herzustellen bzw. vorzuhalten, um eine komplette Kupplungseinrichtung ausbilden bzw. zusammensetzen zu können. Der fertigungs- und lagerungstechnische Aufwand zur Ausbildung der Vorrichtung ist damit erheblich vereinfacht. In diesem Zusammenhang ist nochmals anzumerken, dass ein erstes bzw. ein zweites Kupplungseinrichtungsteilsegment mit einem (einzigen) Grundabschnitt, allgemein einer bestimmten Anzahl an Grundabschnitten, mit wenigstens einem an einem ersten freien axialen Ende oder im Bereich eines ersten freien axialen Endes des oder eines Grundabschnitts angeordneten oder ausgebildeten ersten bzw. zweiten Formschlusselement als eine Grundbaueinheit zur Ausbildung eines entsprechend segmentierten ersten oder zweiten Kupplungseinrichtungsteils erachtet werden kann.

An dem ersten Kupplungseinrichtungsteil oder an wenigstens einem ersten Kupplungseinrichtungsteilsegment ist wenigstens ein erstes Führungselement und an dem zweiten Kupplungseinrichtungsteil oder an wenigstens einem zweiten Kupplungseinrichtungsteilsegment wenigstens ein, gegebenenfalls zu dem wenigstens einen ersten Führungselement korrespondierendes, zweites Führungselement angeordnet oder ausgebildet. Das wenigstens eine an dem ersten Kupplungseinrichtungsteil oder an wenigstens einem ersten Kupplungseinrichtungsteilsegment angeordnete oder ausgebildete erste Führungselement und das wenigstens eine an dem zweiten Kupplungseinrichtungsteil oder an wenigstens einem zweiten Kupplungseinrichtungsteilsegment angeordnete oder ausgebildete zweite Führungselement sind dazu ausgebildet, unter Ausbildung einer in radialer Richtung relativ zueinander beweglichen Führung des ersten Kupplungseinrichtungsteils und des zweiten Kupplungseinrichtungsteils oder wenigstens eines ersten Kupplungseinrichtungsteilsegments und wenigstens eines zweiten Kupplungseinrichtungsteilsegments zusammenzuwirken. Entsprechende Führungselemente können insofern auch als radiale Führungselemente bezeichnet bzw. erachtet werden. Entsprechende Führungselemente können insbesondere an entsprechenden, an jeweiligen ersten freien axialen Ende oder im Bereich jeweiliger erster freier axialer Enden ausgebildeten Verbindungsabschnitten jeweiliger erster bzw. zweiter Kupplungseinrichtungsteilsegmente angeordnet oder ausgebildet sein.

Das Zusammenwirken entsprechender erster und zweiter Führungselemente ist insbesondere im Hinblick auf das Verbinden von Rohrelementen ungleichen Außendurchmessers zweckmäßig, da über entsprechende radiale Bewegungen, typischerweise radiale Verschiebungen, des ersten Kupplungseinrichtungsteils bzw. jeweiliger erster Kupplungseinrichtungsteilsegmente relativ zu dem zweiten Kupplungseinrichtungsteil bzw. jeweiligen zweiten Kupplungseinrichtungsteilsegmenten, oder umgekehrt, eine gezielte Veränderung des Innendurchmessers des ersten Kupplungseinrichtungsteils bzw. des Innendurchmessers des zweiten Kupplungseinrichtungsteils, oder umgekehrt, möglich ist. Die Kupplungseinrichtung lässt sich sonach auf vergleichsweise einfache Weise an unterschiedliche Außendurchmesser zu verbindender Rohrelemente anpassen. In Abhängigkeit der radialen Erstreckung jeweiliger Führungselemente lassen sich Rohrelemente mit deutlich unterschiedlichen Außendurchmessern einfach und zuverlässig verbinden.

Es ist zu beachten, dass entsprechende Führungselemente in geometrisch-konstruktiver Hinsicht identisch mit entsprechenden kupplungseinrichtungsteilsegmentseitigen Formschlusselementen ausgebildet sein können. Mit anderen Worten sind entsprechende Formschlusselemente nicht nur dazu ausgebildet, unter Ausbildung einer axialen Verbindung des bzw. eines ersten Kupplungseinrichtungsteils mit dem bzw. einem zweiten Kupplungseinrichtungsteil formschlüssig zusammenzuwirken, sondern auch dazu ausgebildet, unter Ausbildung einer in radialer Richtung relativ zueinander beweglichen Führung des bzw. eines ersten Kupplungseinrichtungsteils und des bzw. eines zweiten Kupplungseinrichtungsteils oder wenigstens eines ersten Kupplungseinrichtungsteilsegments und wenigstens eines zweiten Kupplungseinrichtungsteilsegments zusammenzuwirken.

Konkret kann dies z. B. durch jeweilige erste Formschlusselemente bzw. jeweilige zweite Formschlusselement in Form eines, insbesondere mit einem, bevorzugt pilzkopfförmig, hinterschnittenen freien Ende, ausgebildeten, vorspringenden Abschnitts oder eines Aufnahmeabschnitts für einen solchen vorspringenden Abschnitt realisiert sein, da diese Formschlusselemente typischerweise eine in radialer Richtung relativ zueinander bewegliche Führung des ersten Kupplungseinrichtungsteils und des zweiten Kupplungseinrichtungsteils oder wenigstens eines ersten Kupplungseinrichtungsteilsegments und wenigstens eines zweiten Kupplungseinrichtungsteilsegments erlauben.

Im Hinblick auf die axiale Verbindung des ersten Kupplungseinrichtungsteils und des zweiten Kupplungseinrichtungsteils bestehen grundsätzlich zwei unterschiedliche Möglichkeiten. Einerseits können das erste Kupplungseinrichtungsteil und das zweite Kupplungseinrichtungsteil in axialer Richtung unmittelbar miteinander verbunden sein. Die unmittelbare axiale Verbindung der beiden Kupplungseinrichtungsteile ist insbesondere im Hinblick auf die Aufnahme axial wirkender Kräfte vorteilhaft.

Andererseits kann das erste Kupplungseinrichtungsteil und das zweite Kupplungseinrichtungsteil in axialer Richtung mittelbar unter Zwischenschaltung wenigstens eines Zwischenverbindungsteils miteinander verbunden sein. Durch die Zwischenschaltung entsprechender Zwischenverbindungsteile kann die vermittels der Kupplungseinrichtung axial überbrückbare Distanz zwischen zwei zu verbindenden Rohrelementen grundsätzlich (nahezu) beliebig erweitert werden. Im Zusammenhang mit entsprechenden weiter oben erwähnten radialen Führungselementen sowohl seitens der Kupplungseinrichtungsteile bzw. jeweiliger Kupplungseinrichtungsteilsegmente als auch seitens entsprechender Zwischenverbindungsteile kann gleichermaßen die vermittels der Kupplungseinrichtung radial überbrückbare Distanz zwischen zwei zu verbindenden Rohrelementen ungleichen Außendurchmessers grundsätzlich (nahezu) beliebig erweitert werden.

Nachfolgend werden unterschiedliche Konfigurationsmöglichkeiten entsprechender Zwischenverbindungsteile erläutert. Ein entsprechendes Zwischenverbindungsteil kann z. B. wenigstens ein Formschlusselement zur Verbindung mit einem ersten Formschlusselement des ersten Kupplungseinrichtungsteils bzw. eines ersten Kupplungseinrichtungsteilsegments und wenigstens ein Formschlusselement zur Verbindung mit einem zweiten Formschlusselement des zweiten Kupplungseinrichtungsteils bzw. eines zweiten Kupplungseinrichtungsteilsegments aufweisen. Denkbar ist es auch, dass ein entsprechendes Zwischenverbindungsteil wenigstens ein Formschlusselement zur Verbindung mit einem ersten Formschlusselement des ersten Kupplungseinrichtungsteils bzw. eines ersten Kupplungseinrichtungsteilsegments oder zur Verbindung mit einem zweiten Formschlusselement des zweiten Kupplungseinrichtungsteils bzw. eines zweiten Kupplungseinrichtungsteilsegments und wenigstens ein Formschlusselement zur Verbindung mit einem weiteren Zwischenverbindungsteil aufweist. Weiterhin ist es denkbar, dass ein Zwischenverbindungsteil nur Formschlusselemente zur Verbindung mit einem weiteren Zwischenverbindungsteil aufweist. In diesem Fall sind jedenfalls zusätzlich Zwischenverbindungsteile vorzusehen, welche sich mit dem ersten Kupplungseinrichtungsteil bzw. wenigstens einem ersten Kupplungseinrichtungsteilsegment und dem zweiten Kupplungseinrichtungsteil bzw. wenigstens einem zweiten Kupplungseinrichtungsteilsegment verbinden lassen.

In geometrisch-konstruktiver Hinsicht können entsprechende Zwischenverbindungsteile ebenso einen stegförmigen Grundabschnitt aufweisen. Entsprechende an einem Zwischenverbindungsteil angeordnete oder ausgebildete Formschlusselemente sind typischerweise an oder im Bereich deren jeweiliger freier axialer Enden angeordnet oder ausgebildet.

Selbstverständlich können auch entsprechende Zwischenverbindungsteile mit entsprechend radial gegenüber einem entsprechenden Grundabschnitt (nach Außen) erhöhten laschenartigen Halteabschnitten ausgebildet sein. Jeweilige laschenartige Halteabschnitte können einen jeweiligen axialen Anschlag für ein weiteres Spannelement bilden und können daher ebenso einen entsprechenden kanalartigen bzw. -förmigen Halterungsbereich zur Halterung eines Teils eines weiteren Spannelements definieren.

Weiterhin ist es möglich, dass auch an entsprechenden Zwischenverbindungsteilen wenigstens ein in Umfangsrichtung abragendes Anlaufelement angeordnet oder ausgebildet ist, welches im Montagezustand der Vorrichtung in Umfangsrichtung gegen einen diesem gegenüber liegenden Abschnitt eines Kupplungseinrichtungsteils verspannbar oder verspannt ist. Es gelten obige Ausführungen im Zusammenhang mit an jeweiligen Kupplungseinrichtungsteilen bzw. Kupplungseinrichtungsteilsegmenten angeordneten oder ausgebildeten Anlaufelementen analog.

Wenigstens zwei in Umfangsrichtung benachbart angeordnete Zwischenverbindungsteile können über wenigstens ein diese in Umfangsrichtung verbindendes, insbesondere bandartiges oder -förmiges, Verbindungselement miteinander verbunden sein. Das Verbindungselement kann radial betrachtet aus winklig, insbesondere V-artig, zueinander verlaufenden Verbindungselementsegmenten gebildet sein, welche im Montagezustand der Vorrichtung in Umfangsrichtung gegeneinander verspannbar bzw. verspannt sind. Derart lässt sich die Stabilität der über die Vorrichtung ausbildbaren Verbindung zweier Rohrelemente erhöhen.

Um eine zuverlässige fluiddichte Verbindung entsprechender Rohrelemente sicherzustellen, umfasst die Vorrichtung typischerweise wenigstens ein, insbesondere hohlzylindrisches, Dichtelement zur zumindest abschnittsweisen dichtenden Anordnung an dem Innenumfang des ersten Kupplungseinrichtungsteils und/oder an dem Innenumfang des zweiten Kupplungseinrichtungsteils. Das Dichtelement ist typischerweise aus einem Dichtmaterial, insbesondere einem Elastomermaterial, wie z. B. einem natürlichen oder synthetischen Kautschuk, gebildet.

Die Vorrichtung umfasst ferner typischerweise wenigstens ein, insbesondere band-, manschetten- oder schellenartiges, Spannelement zur Verspannung des ersten Kupplungseinrichtungsteils gegen ein dem ersten Kupplungseinrichtungsteil zuordenbares oder zugeordnetes erstes Rohrelement, und/oder wenigstens ein, insbesondere band-, manschetten- oder schellenartiges, Spannelement zur Verspannung des zweiten Kupplungseinrichtungsteils gegen ein dem zweiten Kupplungseinrichtungsteil zuordenbares oder zugeordnetes zweites Rohrelement. Ein entsprechendes Spannelement ermöglicht eine unverlierbare zentrische Anordnung entsprechender Kupplungseinrichtungsteile an einem diesen jeweils zugeordneten Rohrelement. Jeweilige Kupplungseinrichtungsteile können vermittels entsprechender Spannelemente jeweils gegen den Außendurchmesser eines diesen jeweils zugeordneten Rohrelements verspannt werden.

Bezüglich des Kupplungseinrichtungsteils gelten sämtliche Ausführungen, insbesondere sämtliche für das Kupplungseinrichtungsteil relevanten Ausführungen, bezüglich der Vorrichtung analog.

Weitere Vorteile und Einzelheiten der Erfindung ergeben sich aus den im Folgenden beschriebenen Ausführungsbeispielen sowie anhand der Zeichnung. Dabei zeigen:
- Fig. 1, 2: je eine Prinzipdarstellung einer Vorrichtung gemäß einem Ausführungsbeispiel;
- Fig. 3 - 8: jeweils eine Prinzipdarstellung eines ersten bzw. zweiten Kupplungseinrichtungsteilsegments gemäß einem Ausführungsbeispiel; und
- Fig. 9 - 11: jeweils eine Prinzipdarstellung eines Zwischenverbindungsteils gemäß einem Ausführungsbeispiel.

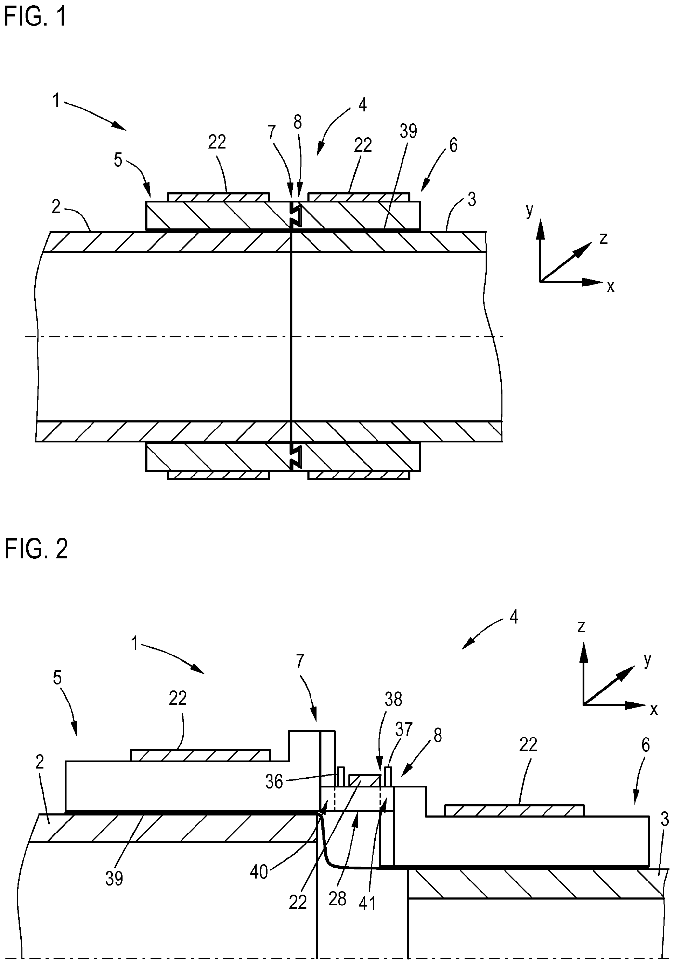

Fig. 1 zeigt eine Prinzipdarstellung einer Vorrichtung 1 gemäß einem Ausführungsbeispiel der Erfindung in einer längsgeschnittenen Ansicht. Die Vorrichtung 1 dient dem Verbinden zweier Rohrelemente 2, 3, d. h. z. B. im Tiefbau bzw. Rohrleitungsbau verwendeter, von einem Fluid durchströmbarer Rohrleitungselemente, gleichen oder ungleichen Außendurchmessers.

Die Vorrichtung 1 umfasst eine Kupplungseinrichtung 4. Die Kupplungseinrichtung 4 umfasst ein erstes hohlzylindrisches Kupplungseinrichtungsteil 5 und ein zweites hohlzylindrisches Kupplungseinrichtungsteil 6. Das erste Kupplungseinrichtungsteil 5 und das zweite Kupplungseinrichtungsteil 6 weisen jeweils eine hohlzylindrische Grundform auf bzw. sind mit einer solchen ausgebildet bzw. zu einer solchen ausbildbar.

Das erste Kupplungseinrichtungsteil 5 ist dem ersten Rohrelement 2 zugeordnet. Das zweite Kupplungseinrichtungsteil 6 ist dem mit dem ersten Rohrelement 2 zu verbindenden bzw. in dem in Fig. 1 gezeigten Montagezustand der Vorrichtung 1 verbundenen zweiten Rohrelement 3 zugeordnet.

An dem ersten Kupplungseinrichtungsteil 5 sind stirnseitig, d. h. im Bereich eines ersten freien axialen Endes des ersten Kupplungseinrichtungsteils 5, in umfangsmäßig benachbarter Anordnung erste Formschlusselemente 7 ausgebildet. An dem zweiten Kupplungseinrichtungsteil 6 sind stirnseitig, d. h. im Bereich eines ersten freien axialen Endes des zweiten Kupplungseinrichtungsteils 6, in umfangsmäßig benachbarter Anordnung zweite Formschlusselemente 8 ausgebildet. Ersichtlich sind jeweilige erste Formschlusselemente 7 des ersten Kupplungseinrichtungsteils 5 jeweiligen zweiten Formschlusselementen 8 des zweiten Kupplungseinrichtungsteils 6 axial gegenüber liegend angeordnet.

Jeweilige an dem ersten Kupplungseinrichtungsteil 5 ausgebildete erste Formschlusselemente 7 und jeweilige an dem zweiten Kupplungseinrichtungsteil 6 ausgebildete zweite Formschlusselemente 8 sind dazu ausgebildet, unter Ausbildung einer axialen Verbindung des ersten Kupplungseinrichtungsteils 5 mit dem zweiten Kupplungseinrichtungsteil 6 formschlüssig zusammenzuwirken. Jeweilige erste und zweite Formschlusselemente 7, 8 wirken dabei insbesondere in axialer Richtung formschlüssig zusammen. Durch eine entsprechende axiale Verbindung des ersten Kupplungseinrichtungsteils 5 mit dem zweiten Kupplungseinrichtungsteil 6 ist auch eine axiale Verbindung des Rohrelements 2 mit dem Rohrelement 3 realisierbar bzw. realisiert.

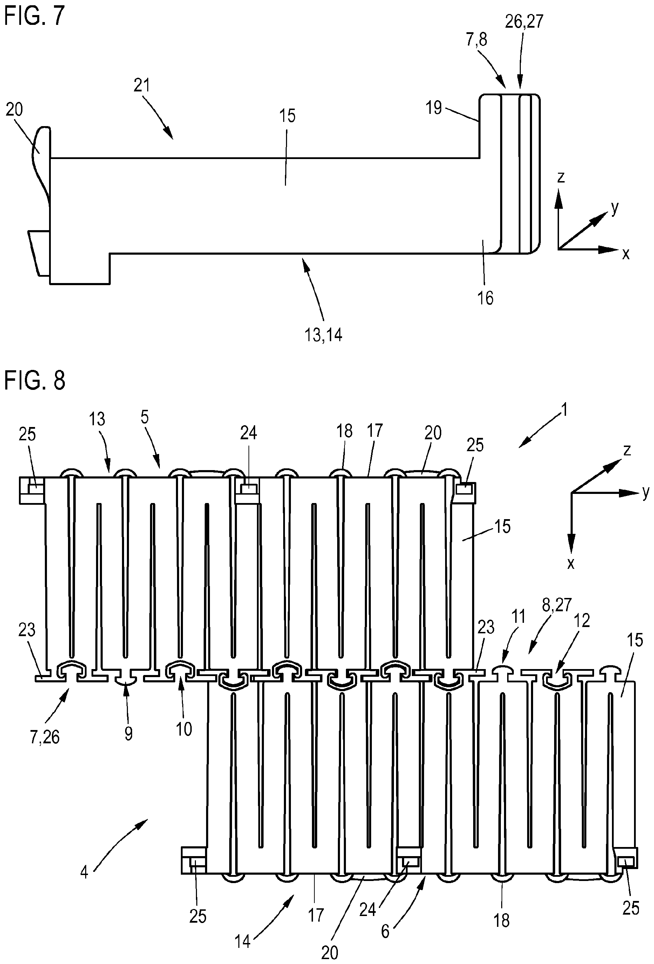

Bei den ersten Formschlusselementen 7 handelt es sich um mit einem, bevorzugt pilzkopfförmig, hinterschnittenen freien Ende ausgebildete, stirnseitig axial von dem ersten Kupplungseinrichtungsteil 5 vorspringende Abschnitte 9 sowie um axiale Aufnahmeabschnitte 10 zur Aufnahme korrespondierender zweiter Formschlusselemente 8 in Form von mit einem, bevorzugt pilzkopfförmig, hinterschnittenen freien Ende ausgebildeten, stirnseitig axial von dem zweiten Kupplungseinrichtungsteil 6 vorspringenden Abschnitten 11 (vgl. insbesondere Fig. 8). Die die ersten Formschlusselemente 7 bildenden vorspringenden Abschnitte 9 bzw. Aufnahmeabschnitte 10 sind in Umfangsrichtung abwechselnd ausgebildet.

Bei den zweiten Formschlusselementen 8 handelt es sich um die erwähnten mit einem, bevorzugt pilzkopfförmig, hinterschnittenen freien Ende ausgebildeten, axial von dem zweiten Kupplungseinrichtungsteil 6 vorspringenden Abschnitte 11 sowie um axiale Aufnahmeabschnitte 12 zur Aufnahme korrespondierender erster Formschlusselemente 7 in Form der axial von dem ersten Kupplungseinrichtungsteil 5 vorspringenden Abschnitte 9 (vgl. insbesondere Fig. 8). Die die zweiten Formschlusselemente 8 bildenden vorspringenden Abschnitte 11 bzw. Aufnahmeabschnitte 12 sind in Umfangsrichtung abwechselnd ausgebildet.

Sowohl seitens des ersten Kupplungseinrichtungsteils 5 als auch seitens des zweiten Kupplungseinrichtungsteils 6 sind sonach in Umfangsrichtung abwechselnd unterschiedlich gestaltete erste bzw. zweite Formschlusselemente 7, 8 ausgebildet.

Die über jeweilige erste und zweite Formschlusselemente 7, 8 ausbildbare axiale Verbindung des ersten Kupplungseinrichtungsteils 5 mit dem zweiten Kupplungseinrichtungsteil 6 ist in den in den Fig. gezeigten Ausführungsbeispielen (beschädigungs- bzw. zerstörungsfrei) lösbar. Prinzipiell kann die über jeweilige erste und zweite Formschlusselemente 7, 8 ausbildbare axiale Verbindung des ersten Kupplungseinrichtungsteils 5 mit dem zweiten Kupplungseinrichtungsteil 6 jedoch auch nicht (beschädigungs- bzw. zerstörungsfrei) lösbar sein. Im Hinblick auf eine nicht lösbare axiale Verbindung können die ersten Formschlusselemente 7 und/oder die zweiten Formschlusselemente 8 mit Befestigungselementen (nicht gezeigt), z. B. in Form von Rast- oder Spannelementen, versehen sein, welche Befestigungselemente derart (zusammen)wirken, dass jeweilige erste und zweite Formschlusselemente 7, 8 ohne Beschädigung bzw. Zerstörung nicht voneinander gelöst werden können.

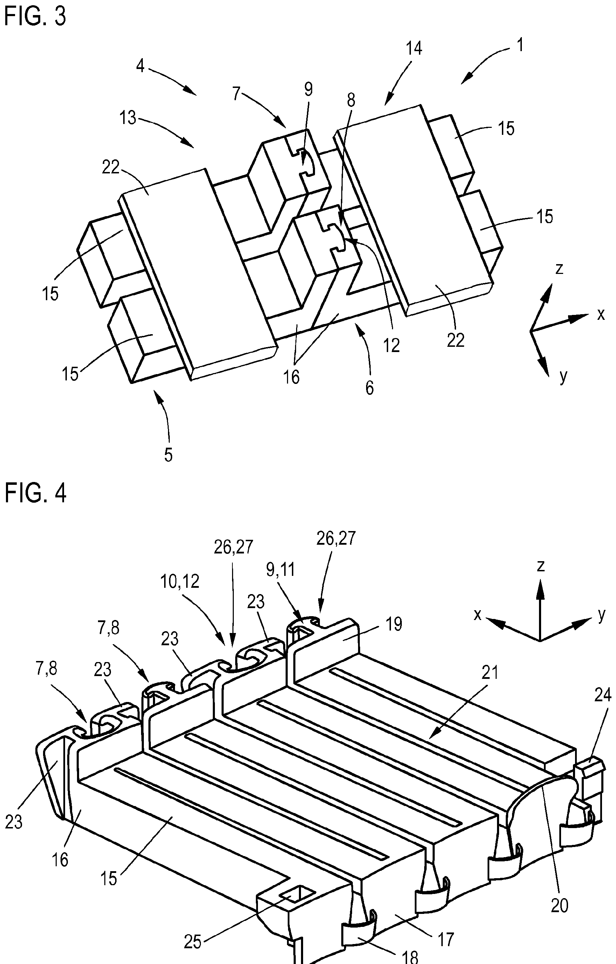

Anhand der Fig. 3 - 8 ergibt sich, dass das erste Kupplungseinrichtungsteil 5 und das zweite Kupplungseinrichtungsteil 6 jeweils umfangsmäßig segmentiert und somit mehrstückig bzw. mehrteilig ausgebildet sein können. Das erste Kupplungseinrichtungsteil 5 ist aus mehreren in Umfangsrichtung zu dem ersten Kupplungseinrichtungsteil 5 verbindbaren oder, wie in Fig. 8 in einer Aufsicht auf die beiden Kupplungseinrichtungsteile 5, 6 angedeutet, verbundenen ersten Kupplungseinrichtungsteilsegmenten 13 gebildet, das zweite Kupplungseinrichtungsteil 6 ist entsprechend aus mehreren in Umfangsrichtung zu dem zweiten Kupplungseinrichtungsteil 6 verbindbaren oder, wie in der in Fig. 8 gezeigten Aufsicht auf die beiden Kupplungseinrichtungsteile 5, 6 angedeutet, verbundenen zweiten Kupplungseinrichtungsteilsegmenten 14 gebildet.

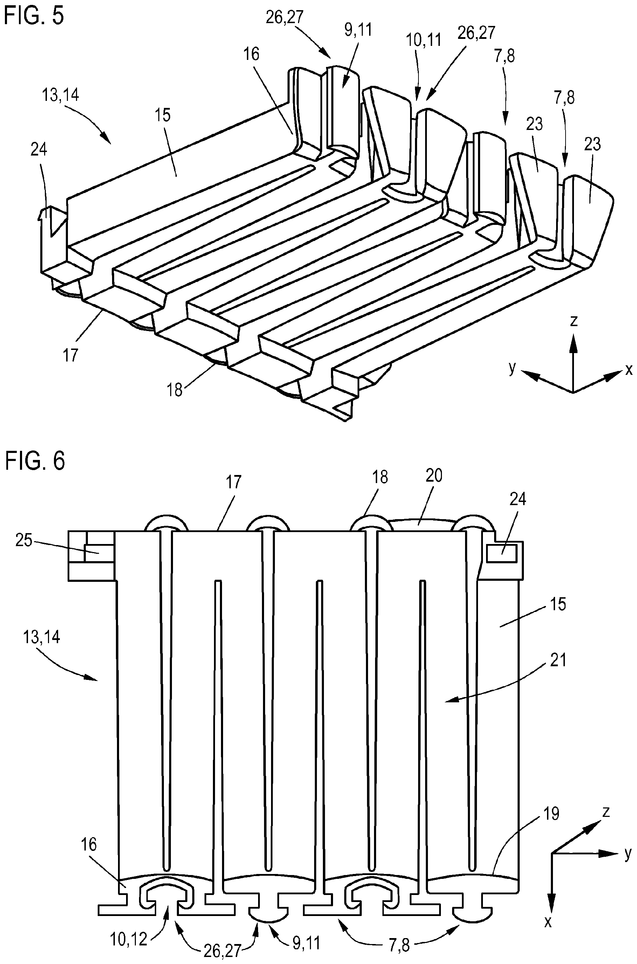

In den Fig. 3 - 8 sind unterschiedliche Ausführungsbeispiele entsprechender erster und zweiter Kupplungseinrichtungsteilsegmente 13, 14 in perspektivischen Ansichten (vgl. Fig. 3 - 5), in Aufsichten (vgl. Fig. 6, 8) und in einer Seitenansicht (vgl. Fig. 7) dargestellt.

Gemein ist den in den Fig. 3 - 8 gezeigten unterschiedlichen Ausführungsbeispielen entsprechender erster und zweiter Kupplungseinrichtungsteilsegmente 13, 14 wenigstens ein stegförmiger Grundabschnitt 15. Wenigstens ein erstes Formschlusselement 7 ist an dem bzw. einem ersten freien axialen Ende wenigstens eines entsprechenden Grundabschnitts 15 eines ersten Kupplungseinrichtungsteilsegments 13 ausgebildet. Wenigstens ein zweites Formschlusselement 8 ist an dem bzw. einem ersten freien axialen Ende wenigstens eines entsprechenden Grundabschnitts 15 eines zweiten Kupplungseinrichtungsteilsegments 14 ausgebildet. Wie sich aus Fig. 8 ergibt, liegen jeweilige erste freie axiale Enden jeweiliger Kupplungseinrichtungsteilsegmente 13, 14 im Montagezustand der Vorrichtung 1 axial betrachtet gegenüber. Jeweilige Grundabschnitte 15 erstrecken sich im Montagezustand der Vorrichtung 1 mit ihrer Längsachse entsprechend in axialer Richtung (vgl. x-Richtung).

In Fig. 3 ist ein erstes Ausführungsbeispiel erster und zweiter Kupplungseinrichtungsteilsegmente 13, 14 gezeigt. Entsprechende erste Kupplungseinrichtungsteilsegmente 13 weisen hier einen (einzigen) Grundabschnitt 15 mit einem (einzigen) an einem ersten freien axialen Ende des Grundabschnitts 15 ausgebildeten ersten Formschlusselement 7 in Form eines entsprechenden axial vorspringenden hinterschnittenen Abschnitts 9, entsprechende zweite Kupplungseinrichtungsteilsegmente 14 weisen hier einen (einzigen) Grundabschnitt 15 mit einem (einzigen) an einem ersten freien axialen Ende des Grundabschnitts 15 ausgebildeten zweiten Formschlusselement 8 in Form eines entsprechenden vorspringenden Aufnahmeabschnitts 12 auf.

In den Fig. 4 - 7 ist ein weiteres Ausführungsbeispiel erster und zweiter Kupplungseinrichtungsteilsegmente 13, 14 gezeigt. Entsprechende erste Kupplungseinrichtungsteilsegmente 13 und entsprechende zweite Kupplungseinrichtungsteilsegmente 14 weisen hier jeweils mehrere Grundabschnitte 15 auf. Die Grundabschnitte 15 sind winklig geneigt zueinander verlaufend angeordnet. Anhand der Fig. 4 - 7 ist zu erkennen, dass eine winklige Anordnung entsprechender Grundabschnitte 15 eine V-artige Anordnung zweier in Umfangsrichtung (vgl. y-Richtung) unmittelbar benachbart angeordneter Grundabschnitte 15 bedeutet. Die Grundabschnitte 15 bilden dabei die Schenkel des "V". Die winklige Anordnung entsprechender unmittelbar benachbart angeordneter Grundabschnitte 15 kann im Montagezustand der Vorrichtung 1 aufgehoben sein, da die Grundabschnitte 15 im Montagezustand der Vorrichtung 1 typischerweise in Umfangsrichtung typischerweise derart gegeneinander verspannt sind, dass diese in paralleler Ausrichtung, insbesondere unmittelbar aneinander anliegend, angeordnet sind.

Ersichtlich sind jeweils zwei in Umfangsrichtung unmittelbar benachbart angeordnete Grundabschnitte 15 jeweiliger erster und zweiter Kupplungseinrichtungsteilsegmente 13, 14 im Bereich jeweiliger erster freier axialer Enden über plattenartige Verbindungsabschnitte 16, insbesondere in Umfangsrichtung, miteinander verbunden. Entsprechende Verbindungsabschnitte 16 gewährleisten eine Verbindung jeweiliger erster freier axialer Enden zweier in Umfangsrichtung unmittelbar benachbart angeordneter Grundabschnitte 15 eines jeweiligen Kupplungseinrichtungsteilsegments 13, 14 in Umfangsrichtung. Ersichtlich sind jeweilige erste Formschlusselemente 7 bzw. jeweilige zweite Formschlusselemente 8 an entsprechenden Verbindungsabschnitten 16 bzw. im Bereich entsprechender Verbindungsabschnitte 16 ausgebildet.

Zwei in Umfangsrichtung unmittelbar benachbart angeordnete Grundabschnitte 15 sind im Bereich eines dem ersten freien axialen Ende gegenüber liegenden zweiten freien axialen Endes über weitere plattenartige Verbindungsabschnitte 17, insbesondere in Umfangsrichtung, miteinander verbunden. Entsprechende weitere Verbindungsabschnitte 17 gewährleisten eine Verbindung jeweiliger zweiter freier axialer Enden zweier in Umfangsrichtung unmittelbar benachbart angeordneter Grundabschnitte 15 eines jeweiligen Kupplungseinrichtungsteilsegments 13, 14 in Umfangsrichtung. Ersichtlich sind jeweilige erste Verbindungsabschnitte 16 und jeweilige weitere Verbindungsabschnitte 17 in Umfangsrichtung um einen Grundabschnitt 15, d. h. um die Breite eines Grundabschnitts 15, versetzt zueinander angeordnet.

Ferner sind zwei in Umfangsrichtung unmittelbar benachbart angeordnete Grundabschnitte 15 jeweiliger erster bzw. zweiter Kupplungseinrichtungsteilsegmente 13, 14 im Bereich ihrer jeweiligen zweiten freien axialen Enden über ein bügelartig gewölbtes Verbindungselement 18, insbesondere in Umfangsrichtung, miteinander verbunden. Da in dem in den Fig. 4 - 8 gezeigten Ausführungsbeispiel entsprechende weitere Verbindungsabschnitte 17 vorgesehen sind, dienen entsprechende Verbindungselemente 18 dazu, zwei in Umfangsrichtung unmittelbar benachbart angeordnete weitere Verbindungsabschnitte 17 miteinander zu verbinden. Die Verbindungselemente 18 unterbinden eine radiale Aufspreizung bzw. eine radiale Verschiebung jeweiliger Grundabschnitte 15 im Bereich jeweiliger zweiter freier axialer Enden. Weiterhin nehmen entsprechende Verbindungselemente 18, insbesondere in Umfangsrichtung wirkende, Druck- und/oder Spannkräfte im Montagezustand der Vorrichtung 1 auf.

Entsprechende Verbindungselemente 18 sind in Umfangsrichtung zumindest abschnittsweise elastisch-federnd ausgebildet. Die elastisch-federnden Eigenschaften der Verbindungselemente 18 können durch konstruktive Paramater, wie insbesondere Wandstärken, gezielt beeinflusst werden. Die elastisch-federnden Eigenschaften sind konstruktiv insbesondere durch die bügelartig gewölbte Ausführung der Verbindungselemente 18 realisiert. Die Wölbung ist in dem in den Fig. 4 - 8 gezeigten Ausführungsbeispiel axial betrachtet in Richtung des jeweiligen zweiten freien axialen Endes jeweiliger Kupplungseinrichtungsteilsegmente 13, 14 ausgerichtet.

Insbesondere anhand der in Fig. 7 gezeigten Seitenansicht ist zu erkennen, dass im Bereich jeweiliger erster freier axialer Enden jeweiliger Grundabschnitte 15 jeweiliger Kupplungseinrichtungsteilsegmente 13, 14 gegenüber den jeweiligen Grundabschnitten 15 radial (nach Außen) erhöhte erste laschenartige Halteabschnitte 19 und im Bereich jeweiliger zweiter freier axialer Enden jeweiliger Grundabschnitte 15 jeweiliger Kupplungseinrichtungsteilsegmente 13, 14 gegenüber den jeweiligen Grundabschnitten 15 radial (nach Außen) erhöhte zweite laschenartige Halteabschnitte 20 ausgebildet sind. Jeweilige laschenartige Halteabschnitte 19, 20 bilden einen jeweiligen axialen Anschlag für ein ein jeweiliges Kupplungseinrichtungsteil 5, 6, insbesondere in Umfangsrichtung, verspannendes, band-, manschetten- oder schellenartiges, Spannelement 22 (vgl. Fig. 1, 2) und definieren somit einen auch als "Spannelementkanal" zu bezeichnenden bzw. zu erachtenden kanalartigen Halterungsbereich 21 zur Halterung eines Teils eines entsprechenden Spannelements 22. Ersichtlich weist der Halterungsbereich 21 in der in Fig. 7 gezeigten Seitenansicht in etwa die Form eines "U" auf.

Insbesondere anhand der in Fig. 5 gezeigten perspektivischen Darstellung ist ersichtlich, dass an bestimmten ersten laschenartigen Halteabschnitten 19 jeweiliger Kupplungseinrichtungsteilsegmente 13, 14 ferner in Umfangsrichtung flügelartig abragende Anlaufelemente 23 ausgebildet sind. Entsprechende Anlaufelemente 23 eines ersten Kupplungseinrichtungsteilsegments 13 sind im Montagezustand der Vorrichtung 1 in Umfangsrichtung gegen einen diesen gegenüber liegenden Abschnitt eines zweiten Kupplungseinrichtungsteils 6 verspannbar bzw. verspannt, entsprechende Anlaufelemente 23 eines zweiten Kupplungseinrichtungsteilsegments 14 sind im Montagezustand der Vorrichtung 1 in Umfangsrichtung gegen einen diesen gegenüber liegenden Abschnitt eines ersten Kupplungseinrichtungsteils 5 verspannbar bzw. verspannt (vgl. Fig. 8). Die Anlaufelemente 23 ermöglichen daher eine umfangsmäßige Verspannung des ersten Kupplungseinrichtungsteils 5 gegen das zweite Kupplungseinrichtungsteil 6, und umgekehrt.

Entsprechende Anlaufelemente 23 eines ersten Kupplungseinrichtungsteilsegments 13 sind im Bereich eines eine Aufnahme für ein gegengleiches zweites Formschlusselement 8 bildenden ersten Formschlusselements 7 ausgebildet. Entsprechende Anlaufelemente 23 eines ersten Kupplungseinrichtungsteilsegments 13 können insofern auch umfangsmäßige Übergriffs- oder Überlappungsabschnitte zum Übergreifen bzw. zur Überlappung entsprechender Anlaufelemente 23 eines zweiten Kupplungseinrichtungsteilsegments 14 bilden. Entsprechende Anlaufelemente 23 eines zweiten Kupplungseinrichtungsteilsegments 14 sind im Bereich eines eine Aufnahme für ein gegengleiches erstes Formschlusselement 7 bildenden zweiten Formschlusselements 8 ausgebildet. Entsprechende Anlaufelemente 23 eines zweiten Kupplungseinrichtungsteilsegments 14 können insofern umfangsmäßige Übergriffs- oder Überlappungsabschnitte zum Übergreifen bzw. zur Überlappung entsprechender Anlaufelemente 23 eines ersten Kupplungseinrichtungsteilsegments 13 bilden.

Ersichtlich weisen entsprechende Anlaufelemente 23 eine in radialer Richtung (vgl. z-Achse) rampenförmig nach Außen ansteigende geometrische Gestalt auf. In Umfangsrichtung benachbart angeordnete Anlaufelemente 23 jeweiliger Kupplungseinrichtungsteilsegmente 13, 14 sind in Umfangsrichtung in entgegengesetzten Richtungen ausgerichtet; ein erstes Anlaufelement 23 weist also eine im Uhrzeigersinn ausgerichtete, in radialer Richtung rampenförmig nach Außen ansteigende geometrische Gestalt auf, ein in Umfangsrichtung benachbart angeordnetes zweites Anlaufelement 23 weist entsprechend eine im Gegenuhrzeigersinn ausgerichtete, in radialer Richtung rampenförmig nach Außen ansteigende geometrische Gestalt auf.

Um eine zur Ausbildung jeweiliger Kupplungseinrichtungsteile 5, 6 erforderliche umfangsmäßige Verbindung jeweiliger Kupplungseinrichtungsteilsegmente 13, 14 zu realisieren, sind an jeweiligen in Umfangsrichtung (einseitig) freiliegenden Grundabschnitten 15 jeweiliger Kupplungseinrichtungsteilsegmente 13, 14 Verbindungselemente 24, 25 zum umfangsmäßigen Verbinden eines jeweiligen Kupplungseinrichtungsteilsegments 13, 14 mit einem korrespondierenden Verbindungselement 24, 25 eines weiteren jeweiligen Kupplungseinrichtungsteilsegments 13, 14 ausgebildet. Entsprechende Verbindungselemente 24 sind als radialer zapfenartiger, gegebenenfalls hinterschnittener, Rastvorsprung und entsprechende korrespondierende Verbindungselement 25 als durchbrechungsartige Rastaufnahme für entsprechende Rastvorsprünge ausgebildet.

Wie durch die doppelte Verwendung von Bezugszeichen in den Fig. 4 - 7 angedeutet, sind jeweilige erste Kupplungseinrichtungsteilsegmente 13 zur Ausbildung des ersten Kupplungseinrichtungsteils 5 und jeweilige zweite Kupplungseinrichtungsteilsegmente 14 zur Ausbildung des zweiten Kupplungseinrichtungsteils 6 identisch, d. h. mit identischen geometrischen Abmessungen, d. h. insbesondere mit identischer geometrischer Form, ausgebildet. Entsprechend ist es möglich, mit mehreren geometrisch identischen Bauelementen in Form jeweiliger Kupplungseinrichtungsteilsegmente 13, 14 eines einzigen Typs ein komplettes erstes Kupplungseinrichtungsteil 5, ein komplettes zweites Kupplungseinrichtungsteil 6 und somit eine komplette Kupplungseinrichtung 4 auszubilden bzw. zusammenzusetzen. Die in den Fig. 4 - 8 gezeigten Kupplungseinrichtungsteilsegmente 13, 14 können sonach als Grundbaueinheiten zur Ausbildung eines ersten Kupplungseinrichtungsteils 5, eines zweiten Kupplungseinrichtungsteils 6 und somit zur Ausbildung einer Kupplungseinrichtung 4 erachtet werden.

In diesem Zusammenhang ist auch anzumerken, dass ein erstes bzw. ein zweites Kupplungseinrichtungsteilsegment 13, 14 mit einem (einzigen) Grundabschnitt 15 mit wenigstens einem an einem ersten freien axialen Ende oder im Bereich eines ersten freien axialen Endes des Grundabschnitts 15 ausgebildeten ersten und/oder zweiten Formschlusselement 7, 8 (vgl. das in Fig. 3 gezeigte Ausführungsbeispiel) ebenso als eine Grundbaueinheit zur Ausbildung eines entsprechend segmentierten ersten oder zweiten Kupplungseinrichtungsteils 5, 6 erachtet werden kann.

An jeweiligen ersten Kupplungseinrichtungsteilsegmenten 13 sind erste Führungselemente 26 und an jeweiligen zweiten Kupplungseinrichtungsteilsegmenten 14 zu den ersten Führungselementen 26 korrespondierendes zweite Führungselemente 27 ausgebildet. Entsprechende Führungselemente 26, 27 sind im Bereich jeweiliger erster freier axialer Enden jeweiliger Kupplungseinrichtungsteilsegmente 13, 14, d. h. im Bereich jeweiliger erster Verbindungsabschnitte 16 jeweiliger erster bzw. zweiter Kupplungseinrichtungsteilsegmente 13, 14, ausgebildet. Die an jeweiligen ersten Kupplungseinrichtungsteilsegmenten 13 ausgebildeten ersten Führungselemente 26 und die an jeweiligen zweiten Kupplungseinrichtungsteilsegmenten 14 ausgebildeten zweiten Führungselemente 27 sind dazu ausgebildet, unter Ausbildung einer in radialer Richtung relativ zueinander beweglichen Führung des ersten Kupplungseinrichtungsteils 5 und des zweiten Kupplungseinrichtungsteils 6 bzw. wenigstens eines ersten Kupplungseinrichtungsteilsegments 13 und wenigstens eines zweiten Kupplungseinrichtungsteilsegments 14 zusammenzuwirken. Entsprechende Führungselemente 26, 27 können insofern auch als radiale Führungselemente bezeichnet bzw. erachtet werden.

Das Zusammenwirken entsprechender Führungselemente 26, 27 ist insbesondere im Hinblick auf das Verbinden von Rohrelementen 2, 3 ungleichen Außendurchmessers zweckmäßig, da über entsprechende radiale Bewegungen, typischerweise radiale Verschiebungen, des ersten Kupplungseinrichtungsteils 5 bzw. jeweiliger erster Kupplungseinrichtungsteilsegmente 13 relativ zu dem zweiten Kupplungseinrichtungsteil 6 bzw. jeweiligen zweiten Kupplungseinrichtungsteilsegmenten 14, oder umgekehrt, eine gezielte Veränderung des Innendurchmessers des ersten Kupplungseinrichtungsteils 5 bzw. des Innendurchmessers des zweiten Kupplungseinrichtungsteils 6 möglich ist. Die Kupplungseinrichtung 4 lässt sich sonach auf vergleichsweise einfache Weise an unterschiedliche Außendurchmesser zu verbindender Rohrelemente 2, 3 anpassen.

Ersichtlich sind entsprechende Führungselemente 26, 27 in den in den Fig. gezeigten Ausführungsbeispielen in geometrisch-konstruktiver Hinsicht identisch mit entsprechenden kupplungseinrichtungsteilsegmentseitigen Formschlusselementen 7, 8 ausgebildet. Entsprechende Formschlusselemente 7, 8 sind also nicht nur dazu ausgebildet, unter Ausbildung einer axialen Verbindung des ersten Kupplungseinrichtungsteils 5 mit dem zweiten Kupplungseinrichtungsteil 6 formschlüssig zusammenzuwirken, sondern auch dazu ausgebildet, unter Ausbildung einer in radialer Richtung relativ zueinander beweglichen Führung des ersten Kupplungseinrichtungsteils 5 und des zweiten Kupplungseinrichtungsteils 6 oder wenigstens eines ersten Kupplungseinrichtungsteilsegments 13 und wenigstens eines zweiten Kupplungseinrichtungsteilsegments 14 zusammenzuwirken.

Konkret ist dies über jeweilige erste Formschlusselemente 7 bzw. jeweilige zweite Formschlusselemente 8 in Form entsprechender vorspringender Abschnitte 9, 11 oder entsprechender Aufnahmeabschnitte 10, 12 für entsprechende vorspringende Abschnitte 9, 11 realisiert, da diese Formschlusselemente 7, 8 auch eine in radialer Richtung relativ zueinander bewegliche Führung der Kupplungseinrichtungsteile 5, 6 bzw. jeweiliger Kupplungseinrichtungsteilsegmente 13, 14 erlauben.

In den Fig. 1, 8 ist gezeigt, dass das erste Kupplungseinrichtungsteil 5 und das zweite Kupplungseinrichtungsteil 6 in axialer Richtung unmittelbar miteinander verbunden sein können. Anhand der Fig. 2 sowie der Fig. 9 - 11 wird im Weiteren erläutert, dass das erste Kupplungseinrichtungsteil 5 und das zweite Kupplungseinrichtungsteil 6 in axialer Richtung auch mittelbar, d. h. unter Zwischenschaltung von Zwischenverbindungsteilen 28, miteinander verbunden sein können.

Aus Fig. 2, welche eine Prinzipdarstellung einer Vorrichtung 1 gemäß einem weiteren Ausführungsbeispiel in einer längsgeschnittenen Ansicht zeigt, ergibt sich, dass durch die Zwischenschaltung entsprechender Zwischenverbindungsteile 28 die vermittels der Kupplungseinrichtung 4 axial überbrückbare Distanz zwischen zwei zu verbindenden Rohrelementen 2, 3 erweitert werden kann. Im Zusammenhang mit entsprechenden radialen Führungselementen 26, 27 sowohl seitens der Kupplungseinrichtungsteile 5, 6 bzw. jeweiliger Kupplungseinrichtungsteilsegmente 13, 14 als auch seitens entsprechender Zwischenverbindungsteile 28 kann gleichermaßen die vermittels der Kupplungseinrichtung 4 radial überbrückbare Distanz zwischen zwei zu verbindenden Rohrelementen 2, 3 ungleichen Außendurchmessers erweitert werden (vgl. Fig. 2, z-Richtung).

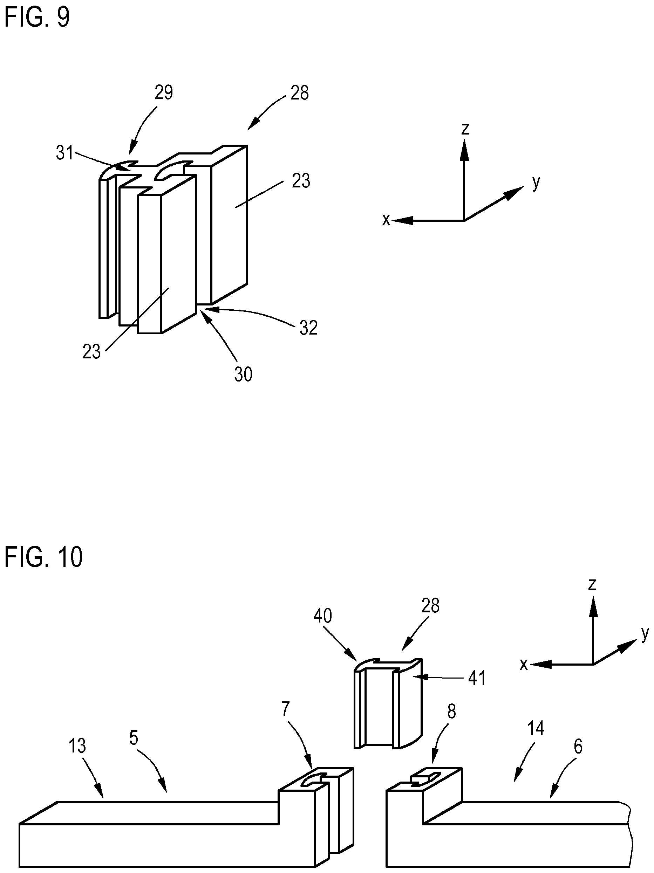

Anhand der Fig. 9 - 11 werden unterschiedliche Konfigurationsmöglichkeiten entsprechender Zwischenverbindungsteile 28 erläutert.

Ein wie in Fig. 9 gezeigtes Zwischenverbindungsteil 28 weist zwei unterschiedliche Formschlusselemente 29, 30 in axial gegenüber liegender Anordnung auf. Die Formschlusselemente 29, 30 ermöglichen eine Verbindung mit einem ersten Formschlusselement 7 des ersten Kupplungseinrichtungsteils 5 bzw. eines ersten Kupplungseinrichtungsteilsegments 13 und mit einem zweiten Formschlusselement 8 des zweiten Kupplungseinrichtungsteils 6 bzw. eines zweiten Kupplungseinrichtungsteilsegments 14. Bei dem Formschlusselement 29 handelt es sich um einen, bevorzugt pilzkopfförmig, hinterschnittenen axial von dem Zwischenverbindungsteil 28 vorspringenden Abschnitt 31 zum Eingriff in einen entsprechenden Aufnahmeabschnitt 10, 12 eines Kupplungseinrichtungsteils 5, 6 bzw. eines Kupplungseinrichtungsteilsegments 13, 14. Bei dem Formschlusselement 30 handelt es sich um einen Aufnahmeabschnitt 32 zur Aufnahme eines von einem Kupplungseinrichtungsteil 5, 6 bzw. einem Kupplungseinrichtungsteilsegment 13, 14 axial vorspringenden Abschnitts 9, 11.

Ersichtlich sind in Fig. 9 an dem Zwischenverbindungsteil 28 ferner in Umfangsrichtung abragende Anlaufelemente 23 ausgebildet, welche im Montagezustand der Vorrichtung 1 in Umfangsrichtung gegen einen diesem gegenüber liegenden Abschnitt eines Kupplungseinrichtungsteils 5, 6 verspannbar oder verspannt sind. Entsprechende Anlaufelemente 23 weisen eine in radialer Richtung (vgl. z-Achse) rampenförmig nach Außen ansteigende geometrische Gestalt auf. In Umfangsrichtung benachbart angeordnete Anlaufelemente 23 können in Umfangsrichtung in entgegengesetzten Richtungen ausgerichtet sein.

Ein wie in Fig. 10 gezeigtes Zwischenverbindungsteil 28 weist ein Formschlusselement 40 zur Verbindung mit einem ersten Formschlusselement 7 des ersten Kupplungseinrichtungsteils 5 bzw. eines ersten Kupplungseinrichtungsteilsegments 13 und wenigstens ein Formschlusselement 41 zur Verbindung mit einem zweiten Formschlusselement 8 des zweiten Kupplungseinrichtungsteils 6 bzw. eines zweiten Kupplungseinrichtungsteilsegments 14 auf. Die Formschlusselemente 40, 41 sind geometrisch identisch ausgebildet; bei beiden Formschlusselementen 40, 41 handelt es sich um einen nicht weiter bezeichneten, bevorzugt pilzkopfförmig, hinterschnittenen axial vorspringenden Abschnitt.

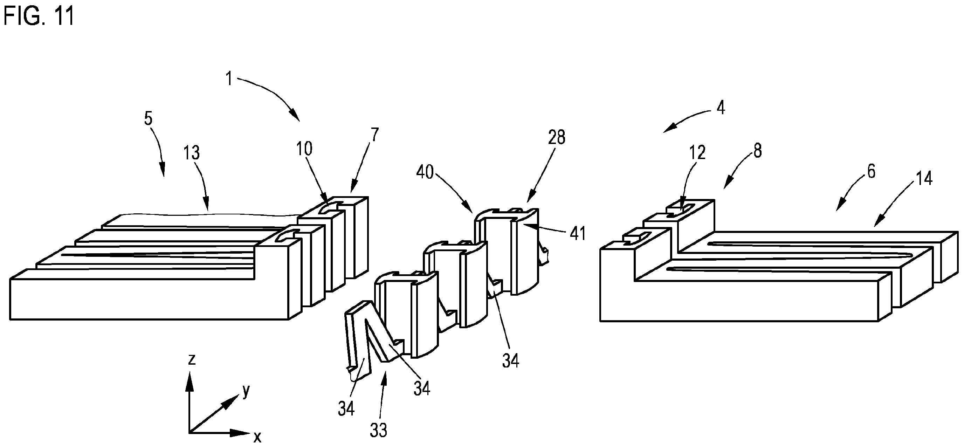

Ein wie in Fig. 11 gezeigtes Zwischenverbindungsteil 28 weist zwei den im Zusammenhang mit dem in Fig. 10 gezeigten Zwischenverbindungsteil 28 beschriebenen Formschlusselementen 40, 41 entsprechende Formschlusselemente 40, 41 auf. Bei den Formschlusselementen 40, 41 handelt es sich jeweils um einen, bevorzugt pilzkopfförmig, hinterschnittenen axial von dem Zwischenverbindungsteil 28 vorspringenden Abschnitt zum Eingriff in einen entsprechenden Aufnahmeabschnitt 10, 12 eines Kupplungseinrichtungsteils 5, 6 bzw. eines Kupplungseinrichtungsteilsegments 13, 14. Die Formschlusselemente 40, 41 ermöglichen entsprechend eine Verbindung mit einem ersten Formschlusselement 7 des ersten Kupplungseinrichtungsteils 5 bzw. eines ersten Kupplungseinrichtungsteilsegments 13 und mit einem zweiten Formschlusselement 8 des zweiten Kupplungseinrichtungsteils 6 bzw. eines zweiten Kupplungseinrichtungsteilsegments 14.

Ersichtlich sind in Umfangsrichtung benachbart angeordnete Zwischenverbindungsteile 28 in Fig. 11 über ein diese in Umfangsrichtung verbindendes bandartiges Verbindungselement 33 miteinander verbunden. Das bandartige Verbindungselement 33 ist radial betrachtet aus winklig, insbesondere V-artig, zueinander verlaufenden Verbindungselementsegmenten 34 gebildet, welche im Montagezustand der Vorrichtung 1 in Umfangsrichtung gegeneinander verspannbar bzw. verspannt sind. Die Verbindungselementsegmente 34 verleihen dem bandartigen Verbindungselement 33 Flexibilität in diversen Freiheitsgraden, d. h. insbesondere in axialer Richtung, in radialer Richtung und in Umfangsrichtung, sodass die durch das Verbindungselement 33 miteinander verbundenen Zwischenverbindungsteile 28 beliebig relativ zueinander bewegbar sind. Insbesondere sind Stauch- bzw. Streckbewegungen des Verbindungselements 33 möglich, sodass umfangsmäßig benachbarte Zwischenverbindungsteile 28 in Umfangsrichtung um ein gewisses Maß angenähert oder um ein gewisses Maß voneinander entfernt werden können.

Die Verbindungselementsegmente 34 können aus einem im Vergleich zu den Zwischenverbindungsteilen 28 elastisch-flexibleren Material, z. B. einem spritzgießfähigen und somit im Rahmen eines Spritzgießprozesses verarbeitbaren thermoplastischen Elastomer (z. B. im Vergleich zu einem vergleichsweise starren Polymer, wie z. B. Polyamid, Polycarbonat etc. zur Ausbildung jeweiliger Zwischenverbindungsteile 28), ausgebildet bzw. mit einer, z. B. durch Schlitze gebildeten, elastisch-flexibleren Materialstruktur versehen sein.

Wie sich aus dem in Fig. 2 gezeigten Ausführungsbeispiel ergibt, können entsprechende Zwischenverbindungsteile 28 in geometrisch-konstruktiver Hinsicht ebenso einen stegförmigen Grundabschnitt 35 aufweisen. Entsprechende an einem jeweiligen Zwischenverbindungsteil 28 ausgebildete Formschlusselemente 29, 30 sind im Bereich deren jeweiliger freier axialer Enden ausgebildet. Das in Fig. 2 gezeigte Zwischenverbindungsteil 28 ist ebenso mit radial gegenüber dem Grundabschnitt 35 (nach Außen) erhöhten laschenartigen Halteabschnitten 36, 37 ausgebildet. Jeweilige laschenartige Halteabschnitte 36, 37 definieren einen jeweiligen axialen Anschlag für ein weiteres Spannelement 22 und bilden daher ebenso einen entsprechenden kanalartigen Halterungsbereich 38 zur Halterung eines Teils eines weiteren Spannelements 22.

Um eine zuverlässige fluiddichte Verbindung entsprechender Rohrelemente 2, 3 sicherzustellen, umfasst die Vorrichtung 1 wenigstens ein, insbesondere hohlzylindrisches, Dichtelement 39 zur dichtenden Anordnung an den Innenumfang des ersten Kupplungseinrichtungsteils 5, des zweiten Kupplungseinrichtungsteils 6, sowie, vgl. Fig. 11 den Innenumfang jeweiliger Zwischenverbindungsteile 28. Das Dichtelement 39 ist aus einem Dichtmaterial, insbesondere einem Elastomermaterial, wie z. B. einem natürlichen oder synthetischen Kautschuk, gebildet.

Schließlich ist anzumerken, dass es sich bei den beschriebenen Bestandteilen der Vorrichtung 1 insbesondere um Bauteile aus Metall oder Kunststoff handeln kann. Metalle, wie z. B. Stähle, zeichnen sich insbesondere durch gute mechanische Eigenschaften sowie fertigungstechnische Vorteile, aus. Kunststoffe, wie z. B. thermoplastisch oder duroplastisch, insbesondere spritzgießbare, Polymere, zeichnen sich insbesondere durch eine hohe Korrosionsbeständigkeit, geringes Gewicht und fertigungstechnische Vorteile aus.

## Patentansprüche

1. Vorrichtung (1) zum Verbinden zweier rohrförmiger Rohrelemente (2, 3), insbesondere zweier Rohrleitungselemente, gleichen oder ungleichen Außendurchmessers, umfassend:
eine hohlzylindrische Kupplungseinrichtung (4) mit einem einem ersten Rohrelement (2) zuordenbaren oder zugeordneten hohlzylindrischen ersten Kupplungseinrichtungsteil (5) und einem einem mit dem ersten Rohrelement (2) axial zu verbindenden oder verbundenen zweiten Rohrelement (3) zuordenbaren oder zugeordneten hohlzylindrischen zweiten Kupplungseinrichtungsteil (6), wobei an dem ersten Kupplungseinrichtungsteil (5) wenigstens ein erstes Formschlusselement (7) angeordnet oder ausgebildet ist und an dem zweiten Kupplungseinrichtungsteil (6) wenigstens ein, insbesondere zu dem wenigstens einen ersten Formschlusselement (7) korrespondierendes, zweites Formschlusselement (8) angeordnet oder ausgebildet ist, wobei
das wenigstens eine an dem ersten Kupplungseinrichtungsteil (5) angeordnete oder ausgebildete erste Formschlusselement (7) und das wenigstens eine an dem zweiten Kupplungseinrichtungsteil (6) angeordnete oder ausgebildete zweite Formschlusselement (8) dazu ausgebildet sind, unter Ausbildung einer axialen Verbindung des ersten Kupplungseinrichtungsteils (5) mit dem zweiten Kupplungseinrichtungsteil (6) formschlüssig zusammenzuwirken, wobei durch das formschlüssige Zusammenwirken jeweiliger erster und zweiter Formschlusselemente (7, 8) in jedem Fall eine axiale Verbindung jeweiliger Kupplungseinrichtungsteile (5, 6) gewährleistet ist,
wobei entsprechende Formschlusselemente (7, 8) nicht nur dazu ausgebildet sind, unter Ausbildung einer axialen Verbindung des bzw. eines ersten Kupplungseinrichtungsteils (5) mit dem zweiten Kupplungseinrichtungsteil (6) formschlüssig zusammenzuwirken, sondern auch dazu ausgebildet, unter Ausbildung einer in radialer Richtung relativ zueinander beweglichen Führung des ersten Kupplungseinrichtungsteils (5) und des zweiten Kupplungseinrichtungsteils (6) zusammenzuwirken, wobei
an dem ersten Kupplungseinrichtungsteil (5) wenigstens ein erstes Führungselement (26) angeordnet oder ausgebildet ist und an dem zweiten Kupplungseinrichtungsteil (6) wenigstens ein, insbesondere zu dem wenigstens einen ersten Führungselement (26) korrespondierendes, zweites Führungselement (27) angeordnet oder ausgebildet ist, wobei das wenigstens eine an dem ersten Kupplungseinrichtungsteil (5) angeordnete oder ausgebildete erste Führungselement (26) und das wenigstens eine an dem zweiten Kupplungseinrichtungsteil (6) angeordnete oder ausgebildete zweite Führungselement (27) dazu ausgebildet sind, unter Ausbildung einer in radialer Richtung relativ zueinander beweglichen Führung des ersten Kupplungseinrichtungsteils (5) und des zweiten Kupplungseinrichtungsteils (6) zusammenzuwirken, wobei
über entsprechende radiale Bewegungen des ersten Kupplungseinrichtungsteils (5) relativ zu dem zweiten Kupplungseinrichtungsteil (6), oder umgekehrt, eine gezielte Veränderung des Innendurchmessers des ersten Kupplungseinrichtungsteils (5) oder des zweiten Kupplungseinrichtungsteils (6) möglich ist.

2. Vorrichtung nach Anspruch 1, **dadurch gekennzeichnet, dass**
das erste Kupplungseinrichtungsteil (5) umfangsmäßig segmentiert ausgebildet ist, wobei das erste Kupplungseinrichtungsteil (5) aus mehreren in Umfangsrichtung zu dem ersten Kupplungseinrichtungsteil (5) verbindbaren oder verbundenen ersten Kupplungseinrichtungsteilsegmenten (13) gebildet ist, und/oder
das zweite Kupplungseinrichtungsteil (6) umfangsmäßig segmentiert ausgebildet ist, wobei das zweite Kupplungseinrichtungsteil (6) aus mehreren in Umfangsrichtung zu dem zweiten Kupplungseinrichtungsteil (6) verbindbaren oder verbundenen zweiten Kupplungseinrichtungsteilsegmenten (14) gebildet ist.

3. Vorrichtung nach Anspruch 2, **dadurch gekennzeichnet, dass**
ein erstes Kupplungseinrichtungsteilsegment (13) wenigstens einen stegförmigen Grundabschnitt (15) aufweist, wobei an einem ersten freien axialen Ende oder im Bereich eines ersten freien axialen Endes des stegförmigen Grundabschnitts (15) wenigstens ein erstes Formschlusselement (7) angeordnet oder ausgebildet ist, und/oder
ein zweites Kupplungseinrichtungsteilsegment (6) wenigstens einen stegförmigen Grundabschnitt (15) aufweist, wobei an einem ersten freien axialen Ende oder im Bereich eines ersten freien axialen Endes des stegförmigen Grundabschnitts (15) wenigstens ein zweites Formschlusselement (8) angeordnet oder ausgebildet ist.

4. Vorrichtung nach Anspruch 3, **dadurch gekennzeichnet, dass** ein erstes Kupplungseinrichtungsteilsegment (13) mehrere parallel oder winklig zueinander verlaufend angeordnete stegförmige Grundabschnitte (15) aufweist, wobei zwei unmittelbar benachbart angeordnete stegförmige Grundabschnitte (15) an dem ersten freien axialen Ende oder im Bereich des ersten freien axialen Endes über einen Verbindungsabschnitt (16), insbesondere in Umfangsrichtung, miteinander verbunden sind, wobei wenigstens ein erstes Formschlusselement (7) an dem Verbindungsabschnitt (16) angeordnet oder ausgebildet ist, und/oder ein zweites Kupplungseinrichtungsteilsegment (14) mehrere parallel oder winklig zueinander verlaufend angeordnete stegförmige Grundabschnitte (15) aufweist, wobei zwei unmittelbar benachbart angeordnete stegförmige Grundabschnitte (15) an dem ersten freien axialen Ende oder im Bereich des ersten freien axialen Endes über einen Verbindungsabschnitt (16), insbesondere in Umfangsrichtung, miteinander verbunden sind, wobei wenigstens ein zweites Formschlusselement (8) an dem Verbindungsabschnitt (16) angeordnet oder ausgebildet ist.

5. Vorrichtung nach Anspruch 4, **dadurch gekennzeichnet, dass**
wenigstens zwei in Umfangsrichtung unmittelbar benachbart angeordnete stegförmige Grundabschnitte (15) eines ersten Kupplungseinrichtungsteilsegments (5) an oder im Bereich ihrer jeweiligen ersten freien axialen Enden gegenüber liegenden zweiten freien axialen Enden über ein, insbesondere bogenförmiges, Verbindungselement (18), insbesondere in Umfangsrichtung, miteinander verbunden sind, und/oder
wenigstens zwei in Umfangsrichtung unmittelbar benachbart angeordnete stegförmige Grundabschnitte (15) eines zweiten Kupplungseinrichtungsteilsegments (14) an oder im Bereich ihrer jeweiligen ersten freien axialen Enden gegenüber liegenden zweiten freien axialen Enden über ein, insbesondere bogenförmiges, Verbindungselement (18), insbesondere in Umfangsrichtung, miteinander verbunden sind.

6. Vorrichtung nach einem der Ansprüche 2 bis 5, **dadurch gekennzeichnet, dass** an oder im Bereich des ersten freien axialen Endes des wenigstens einen Grundabschnitts (15) wenigstens eines ersten Kupplungseinrichtungsteilsegments (13) ein gegenüber dem Grundabschnitt (15) radial erhöhter erster laschenartiger Halteabschnitt (19) und an oder im Bereich eines dem ersten freien axialen Ende gegenüber liegenden zweiten freien axialen Endes des wenigstens einen Grundabschnitts (15) des wenigstens einen ersten Kupplungseinrichtungsteilsegments (13) ein gegenüber dem Grundabschnitt (15) radial erhöhter zweiter laschenartiger Halteabschnitt (20) ausgebildet ist, wobei durch den wenigstens einen ersten laschenartigen Halteabschnitt (19) und den wenigstens einen zweiten laschenartigen Halteabschnitt (20) ein Halterungsbereich (21) zur Halterung eines Teils eines das erste Kupplungseinrichtungsteil (5), insbesondere in Umfangsrichtung, verspannenden Spannelements (22) ausgebildet ist, und/oder
an oder im Bereich des ersten freien axialen Endes des wenigstens einen Grundabschnitts (15) wenigstens eines zweiten Kupplungseinrichtungsteilsegments (14) ein gegenüber dem Grundabschnitt (159 radial erhöhter erster laschenartiger Halteabschnitt (19) und an oder im Bereich eines dem ersten freien axialen Ende gegenüber liegenden zweiten freien axialen Endes des wenigstens einen Grundabschnitts (15) des wenigstens einen zweiten Kupplungseinrichtungsteilsegments (14) ein gegenüber dem Grundabschnitt (15) radial erhöhter zweiter laschenartiger Halteabschnitt (20) ausgebildet ist, wobei durch den wenigstens einen ersten laschenartigen Halteabschnitt (19) und den wenigstens einen zweiten laschenartigen Halteabschnitt (20) ein Halterungsbereich (21) zur Halterung eines Teils eines das zweite Kupplungseinrichtungsteil (6), insbesondere in Umfangsrichtung, verspannenden Spannelements (22) ausgebildet ist.

7. Vorrichtung nach Anspruch 6, **dadurch gekennzeichnet, dass**
an wenigstens einem ersten laschenartigen Halteabschnitt (19), insbesondere an zwei in Umfangsrichtung benachbart angeordneten ersten laschenartigen Halteabschnitten (19), eines ersten Kupplungseinrichtungsteilsegments (13) wenigstens ein in Umfangsrichtung abragendes Anlaufelement (23) angeordnet oder ausgebildet ist, welches im Montagezustand der Vorrichtung (1) in Umfangsrichtung gegen einen diesem gegenüber liegenden Abschnitt des zweiten Kupplungseinrichtungsteils (6) verspannbar oder verspannt ist, und/oder an wenigstens einem ersten laschenartigen Halteabschnitt (19), insbesondere an zwei in Umfangsrichtung benachbart angeordneten ersten laschenartigen Halteabschnitten (19), eines zweiten Kupplungseinrichtungsteilsegments (14) wenigstens ein in Umfangsrichtung abragendes Anlaufelement (23) angeordnet oder ausgebildet ist, welches im Montagezustand der Vorrichtung (1) in Umfangsrichtung gegen einen diesem gegenüber liegenden Abschnitt des ersten Kupplungseinrichtungsteils (5) verspannbar oder verspannt ist.

8. Vorrichtung nach Anspruch 7, **dadurch gekennzeichnet, dass**
wenigstens ein Anlaufelement (23) eines ersten Kupplungseinrichtungsteilsegments (13) im Bereich eines eine Aufnahme für ein gegengleiches zweites Formschlusselement (8) bildenden ersten Formschlusselements (7) angeordnet oder ausgebildet ist, und/oder wenigstens ein Anlaufelement (23) eines zweiten Kupplungseinrichtungsteilsegments (14) im Bereich eines eine Aufnahme für ein gegengleiches erstes Formschlusselement (7) bildenden zweiten Formschlusselements (8) angeordnet oder ausgebildet ist.

9. Vorrichtung nach einem der Ansprüche 2 bis 8, **dadurch gekennzeichnet, dass** an wenigstens einem stegförmigen Grundabschnitt (15) eines ersten Kupplungseinrichtungsteilsegments (13) ein Verbindungselement (24, 25) zum umfangsmäßigen Verbinden des ersten Kupplungseinrichtungsteilsegments (13) mit einem, insbesondere korrespondierenden, Verbindungselement (24, 25) eines weiteren ersten Kupplungseinrichtungsteilsegments (13) angeordnet oder ausgebildet ist, und/oder
an wenigstens einem stegförmigen Grundabschnitt (15) eines zweiten Kupplungseinrichtungsteilsegments (14) ein Verbindungselement (24, 25) zum umfangsmäßigen Verbinden des zweiten Kupplungseinrichtungsteilsegments (14) mit einem, insbesondere korrespondierenden, Verbindungselement (24, 25) eines weiteren zweiten Kupplungseinrichtungsteilsegments (14) angeordnet oder ausgebildet ist.

10. Vorrichtung nach Anspruch 9, **dadurch gekennzeichnet, dass** ein Verbindungselement (24) als radialer, insbesondere zapfenartiger, Rastvorsprung und ein, insbesondere korrespondierendes, Verbindungselement (25) als eine, insbesondere durchbrechungsartige, Rastaufnahme für den Rastvorsprung ausgebildet ist.

11. Vorrichtung nach einem der Ansprüche 2 bis 10, **dadurch gekennzeichnet, dass** die ersten Kupplungseinrichtungsteilsegmente (13) und die zweiten Kupplungseinrichtungsteilsegmente (14) identisch ausgebildet sind.

12. Vorrichtung nach einem der vorangehenden Ansprüche, **dadurch gekennzeichnet, dass** ein erstes Formschlusselement (7) ein, insbesondere mit einem, bevorzugt pilzkopfförmig, hinterschnittenen freien Ende, ausgebildeter, vorspringender Abschnitt (9) oder ein Aufnahmeabschnitt (10) für einen solchen vorspringenden Abschnitt (9) oder ein in Umfangsrichtung von dem ersten Kupplungseinrichtungsteil (5) oder einem ersten Kupplungseinrichtungsteilsegment (13) abragender Abschnitt zur umfangsmäßigen Überlappung mit einem, insbesondere korrespondierenden, in Umfangsrichtung abragenden Abschnitt des zweiten Kupplungseinrichtungsteils (6) oder eines zweiten Kupplungseinrichtungsteilsegments (14) ist, und
ein zweites Formschlusselement (6) ein, insbesondere mit einem, bevorzugt pilzkopfförmig, hinterschnittenen freien Ende, ausgebildeter, vorspringender Abschnitt (11) oder ein Aufnahmeabschnitt (12) für einen solchen vorspringenden Abschnitt (11) oder ein in Umfangsrichtung von dem zweiten Kupplungseinrichtungsteil (6) oder einem zweiten Kupplungseinrichtungsteilsegment (14) abragender Abschnitt zur umfangsmäßigen Überlappung mit einem, insbesondere korrespondierenden, in Umfangsrichtung abragenden Abschnitt des ersten Kupplungseinrichtungsteils (5) oder eines ersten Kupplungseinrichtungsteilsegments (13) ist.

13. Vorrichtung nach einem der Ansprüche 2 bis 12, **dadurch gekennzeichnet, dass** an wenigstens einem ersten Kupplungseinrichtungsteilsegment (13) wenigstens ein erstes Führungselement (26) angeordnet oder ausgebildet ist und an wenigstens einem zweiten Kupplungseinrichtungsteilsegment (14) wenigstens ein, insbesondere zu dem wenigstens einen ersten Führungselement (26) korrespondierendes, zweites Führungselement (27) angeordnet oder ausgebildet ist, wobei das wenigstens eine an wenigstens einem ersten Kupplungseinrichtungsteilsegment (13) angeordnete oder ausgebildete erste Führungselement (26) und das wenigstens an wenigstens einem zweiten Kupplungseinrichtungsteilsegment (14) angeordnete oder ausgebildete zweite Führungselement (27) dazu ausgebildet sind, unter Ausbildung einer in radialer Richtung relativ zueinander beweglichen Führung wenigstens eines ersten Kupplungseinrichtungsteilsegments (13) und wenigstens eines zweiten Kupplungseinrichtungsteilsegments (14) zusammenzuwirken.

14. Vorrichtung nach einem der vorangehenden Ansprüche, **dadurch gekennzeichnet, dass** das erste Kupplungseinrichtungsteil (5) und das zweite Kupplungseinrichtungsteil (6) in axialer Richtung unmittelbar miteinander verbunden sind oder mittelbar unter Zwischenschaltung wenigstens eines Zwischenverbindungsteils (28) miteinander verbunden sind.

15. Vorrichtung nach Anspruch 14, **dadurch gekennzeichnet, dass** ein entsprechendes Zwischenverbindungsteil (28)
wenigstens ein Formschlusselement (29, 30, 40) zur Verbindung mit einem ersten Formschlusselement (7) des ersten Kupplungseinrichtungsteils (5) und wenigstens ein Formschlusselement (29, 30, 40) zur Verbindung mit einem zweiten Formschlusselement (8) des zweiten Kupplungseinrichtungsteils (6), oder wenigstens ein Formschlusselement (29, 30, 40) zur Verbindung mit einem ersten Formschlusselement (7) des ersten Kupplungseinrichtungsteils (5) oder zur Verbindung mit einem zweiten Formschlusselement (8) des zweiten Kupplungseinrichtungsteils (6) und wenigstens ein Formschlusselement (41) zur Verbindung mit einem weiteren Zwischenverbindungsteil (28) aufweist.

16. Vorrichtung nach Anspruch 14 oder 15, **dadurch gekennzeichnet, dass** zumindest zwei in Umfangsrichtung benachbart angeordnete Zwischenverbindungsteile (28) über wenigstens ein diese in Umfangsrichtung verbindendes, insbesondere bandartiges oder -förmiges, Verbindungselement (33) miteinander verbunden sind.

17. Vorrichtung nach einem der Ansprüche 14 bis 16, **dadurch gekennzeichnet, dass** an wenigstens einem Zwischenverbindungsteil (28) wenigstens ein in Umfangsrichtung abragendes Anlaufelement (23) angeordnet oder ausgebildet ist, welches im Montagezustand der Vorrichtung (1) in Umfangsrichtung gegen einen diesem gegenüber liegenden Abschnitt eines Kupplungseinrichtungsteils (5, 6) verspannbar oder verspannt ist.

## Claims

1. Arrangement (1) for connecting two tubular pipe elements (2, 3), in particular two pipeline elements, of equal external diameter or unequal external diameters, comprising:
a hollow-cylindrical coupling device (4) having a first hollow-cylindrical coupling-device part (5), which can be or is assigned to a first pipe element (2), and having a second hollow-cylindrical coupling-device part (6), which can be or is assigned to a second pipe element (3), which can be or is connected axially to the first pipe element (2), wherein at least one first form-fitting element (7) is arranged or formed on the first coupling-device part (5) and at least one second form-fitting element (8), which corresponds in particular to the at least one first form-fitting element (7), is arranged or formed on the second coupling-device part (6), wherein the at least one first form-fitting element (7), which is arranged or formed on the first coupling-device part (5), and the at least one second form-fitting element (8), which is arranged or formed on the second coupling-device part (6), are designed to interact in a form-fitting manner to form an axial connection between the first coupling-device part (5) and the second coupling-device part (6), wherein the form-fitting interaction of respective first and second form-fitting elements (7, 8) always ensures an axial connection of respective coupling-device parts (5, 6),
wherein corresponding form-fitting elements (7, 8) are designed not just to interact in a form-fitting manner to form an axial connection between the or a first coupling-device part (5) and the second coupling-device part (6), but are also designed to interact to form a guide for the first coupling-device part (5) and the second coupling-device part (6), the components of the guide being moveable relative to one another in the radial direction, wherein
at least one first guide element (26) is arranged or formed on the first coupling-device part (5) and at least one second guide element (27), which corresponds in particular to the at least one first guide element (26), is arranged or formed on the second coupling-device part (6), wherein the at least one first guide element (26), which is arranged or formed on the first coupling-device part (5), and the at least one second guide element (27), which is arranged or formed on the second coupling-device part (6), are designed to interact to form a guide for the first coupling-device part (5) and the second coupling-device part (6), the components of the guide being movable relative to one another in the radial direction, wherein
corresponding radial movements of the first coupling-device part (5) relative to the second coupling-device part (6), or vice versa, make it possible for the internal diameter of the first coupling-device part (5) or of the second coupling-device part (6) to be altered in a specific manner.

2. Arrangement according to Claim 1, **characterized in that**
the first coupling-device part (5) is of circumferentially segmented design, wherein the first coupling-device part (5) is formed from a plurality of first coupling-device sub-segments (13), which can be or are connected in the circumferential direction to form the first coupling-device part (5), and/or
the second coupling-device part (6) is of circumferentially segmented design, wherein the second coupling-device part (6) is formed from a plurality of second coupling-device sub-segments (14), which can be or are connected in the circumferential direction to form the second coupling-device part (6).

3. Arrangement according to Claim 2, **characterized in that**
a first coupling-device sub-segment (13) has at least one crosspiece-like basic portion (15), wherein at least one first form-fitting element (7) is arranged or formed at a first free axial end, or in the region of a first free axial end, of the crosspiece-like basic portion (15), and/or
a second coupling-device sub-segment (6) has at least one crosspiece-like basic portion (15), wherein at least one second form-fitting element (8) is arranged or formed at a first free axial end, or in the region of a first free axial end, of the crosspiece-like basic portion (15).

4. Arrangement according to Claim 3, **characterized in that**
a first coupling-device sub-segment (13) has a plurality of crosspiece-like basic portions (15), which run parallel or at an angle to one another, wherein two directly adjacent crosspiece-like basic portions (15) are connected to one other, in particular in the circumferential direction, at the first free axial end, or in the region of the first free axial end, via a connecting portion (16), wherein at least one first form-fitting element (7) is arranged or formed on the connecting portion (16), and/or
a second coupling-device sub-segment (14) has a plurality of crosspiece-like basic portions (15), which run parallel or at an angle to one another, wherein two directly adjacent crosspiece-like basic portions (15) are connected to one another, in particular in the circumferential direction, at the first free axial end, or in the region of the first free axial end, via a connecting portion (16), wherein at least one second form-fitting element (8) is arranged or formed on the connecting portion (16).

5. Arrangement according to Claim 4, **characterized in that**
at least two circumferentially directly adjacent crosspiece-like basic portions (15) of a first coupling-device sub-segment (5) are connected to one another, in particular in the circumferential direction, via an in particular arcuate connecting element (18) at, or in the region of, their second free axial ends, which are located opposite respective first free axial ends, and/or
at least two circumferentially directly adjacent crosspiece-like basic portions (15) of a second coupling-device sub-segment (14) are connected to one another, in particular in the circumferential direction, via an in particular arcuate connecting element (18) at, or in the region of, their second free axial ends, which are located opposite respective first free axial ends.

6. Arrangement according to one of Claims 2 to 5, **characterized in that**
a first lug-like retaining portion (19), which is elevated radially in relation to the basic portion (15), is formed at, or in the region of, the first free axial end of the at least one basic portion (15) of at least one first coupling-device sub-segment (13) and a second lug-like retaining portion (20), which is elevated radially in relation to the basic portion (15), is formed at, or in the region of, a second free axial end of the at least one basic portion (15) of the at least one first coupling-device sub-segment (13), said second free axial end being located opposite the first free axial end, wherein a retaining region (21) for retaining part of a clamping element (22) which braces the first coupling-device part (5), in particular in the circumferential direction, is formed by the at least one first lug-like retaining portion (19) and the at least one second lug-like retaining portion (20), and/or
a first lug-like retaining portion (19), which is elevated radially in relation to the basic portion (159, is formed at, or in the region of, the first free axial end of the at least one basic portion (15) of at least one second coupling-device sub-segment (14) and a second lug-like retaining portion (20), which is elevated radially in relation to the basic portion (15), is formed at, or in the region of, a second free axial end of the at least one basic portion (15) of the at least one second coupling-device sub-segment (14), said second free axial end being located opposite the first free axial end, wherein a retaining region (21) for retaining part of a clamping element (22) which braces the second coupling-device part (6), in particular in the circumferential direction, is formed by the at least one first lug-like retaining portion (19) and the at least one second lug-like retaining portion (20).

7. Arrangement according to Claim 6, **characterized in that**
at least one circumferentially projecting run-on element (23) is arranged or formed on at least one first lug-like retaining portion (19), in particular on two circumferentially adjacent first lug-like retaining portions (19), of a first coupling-device sub-segment (13) and, in the assembled state of the arrangement (1), can be or is braced in the circumferential direction in relation to a portion of the second coupling-device part (6) which is located opposite it, and/or
at least one circumferentially projecting run-on element (23) is arranged or formed on at least one first lug-like retaining portion (19), in particular on two circumferentially adjacent first lug-like retaining portions (19), of a second coupling-device sub-segment (14) and, in the assembled state of the arrangement (1), can be or is braced in the circumferential direction in relation to a portion of the first coupling-device part (5) which is located opposite it.

8. Arrangement according to Claim 7, **characterized in that**
at least one run-on element (23) of a first coupling-device sub-segment (13) is arranged or formed in the region of a first form-fitting element (7), which forms a holder for a mating second form-fitting element (8), and/or
at least one run-on element (23) of a second coupling-device sub-segment (14) is arranged or formed in the region of a second form-fitting element (8), which forms a holder for a mating first form-fitting element (7).

9. Arrangement according to one of Claims 2 to 8, **characterized in that**
a connecting element (24, 25) for circumferentially connecting a first coupling-device sub-segment (13) to an in particular corresponding connecting element (24, 25) of a further first coupling-device sub-segment (13) is arranged or formed on at least one crosspiece-like basic portion (15) of the first coupling-device sub-segment (13), and/or
a connecting element (24, 25) for circumferentially connecting a second coupling-device sub-segment (14) to an in particular corresponding connecting element (24, 25) of a further second coupling-device sub-segment (14) is arranged or formed on at least one crosspiece-like basic portion (15) of the second coupling-device sub-segment (14).

10. Arrangement according to Claim 9, **characterized in that**
a connecting element (24) is designed in the form of a radial, in particular pin-like, latching protrusion and an in particular corresponding connecting element (25) is designed in the form of an in particular through-passage-like latching holder for the latching protrusion.

11. Arrangement according to one of Claims 2 to 10, **characterized in that**
the first coupling-device sub-segments (13) and the second coupling-device sub-segments (14) are identical.

12. Arrangement according to one of the preceding claims, **characterized in that**
a first form-fitting element (7) is a projecting portion (9), formed in particular with a free end undercut preferably in the form of a mushroom head, or an accommodating portion (10) for such a projecting portion (9) or a portion which projects in the circumferential direction from the first coupling-device part (5) or a first coupling-device sub-segment (13) and is intended for circumferentially overlapping with an in particular corresponding, circumferentially projecting portion of the second coupling-device part (6) or of a second coupling-device sub-segment (14), and
a second form-fitting element (6) is a projecting portion (11), formed in particular with a free end undercut preferably in the form of a mushroom head, or an accommodating portion (12) for such a projecting portion (11) or a portion which projects in the circumferential direction from the second coupling-device part (6) or a second coupling-device sub-segment (14) and is intended for circumferentially overlapping with an in particular corresponding, circumferentially projecting portion of the first coupling-device part (5) or of a first coupling-device sub-segment (13) .

13. Arrangement according to one of Claims 2 to 12, **characterized in that**
at least one first guide element (26) is arranged or formed on at least one first coupling-device sub-segment (13) and at least one second guide element (27), which corresponds in particular to the at least one first guide element (26), is arranged or formed on at least one second coupling-device sub-segment (14), wherein the at least one first guide element (26), which is arranged or formed on at least one first coupling-device sub-segment (13), and the at least second guide element (27), which is arranged or formed on at least one second coupling-device sub-segment (14), are designed to interact to form a guide for at least one first coupling-device sub-segment (13) and at least one second coupling-device sub-segment (14), the components of the guide being movable relative to one another in the radial direction.

14. Arrangement according to one of the preceding claims, **characterized in that**
the first coupling-device part (5) and the second coupling-device part (6) are connected to one another directly in the axial direction or are connected to one another indirectly with the interposition of at least one intermediate connecting part (28).

15. Arrangement according to Claim 14, **characterized in that**
a corresponding intermediate connecting part (28) has at least one form-fitting element (29, 30, 40) for connecting to a first form-fitting element (7) of the first coupling-device part (5) and at least one form-fitting element (29, 30, 40) for connecting to a second form-fitting element (8) of the second coupling-device part (6) or has at least one form-fitting element (29, 30, 40) for connecting to a first form-fitting element (7) of the first coupling-device part (5) or for connecting to a second form-fitting element (8) of the second coupling-device part (6) and at least one form-fitting element (41) for connecting to a further intermediate connecting part (28).

16. Arrangement according to Claim 14 or 15, **characterized in that**
at least two circumferentially adjacent intermediate connecting parts (28) are connected to one another via at least one in particular strip-like or strip-form connecting element (33), which connects the intermediate connecting parts in the circumferential direction.

17. Arrangement according to one of Claims 14 to 16, **characterized in that**
at least one circumferentially projecting run-on element (23) is arranged or formed on at least one intermediate connecting part (28) and, in the assembled state of the arrangement (1), can be or is braced in the circumferential direction in relation to a portion of a coupling-device part (5, 6) which is located opposite it.

## Revendications

1. Dispositif (1) de liaison de deux éléments de tuyau de forme tubulaire (2, 3), en particulier de deux éléments de conduite tubulaire, de diamètres extérieurs identiques ou différents, comprenant :
un dispositif d'accouplement cylindrique creux (4) avec une première partie de dispositif d'accouplement cylindrique creuse (5) pouvant être associée ou étant associée à un premier élément tubulaire (2) et une deuxième partie de dispositif d'accouplement cylindrique creuse (6), associée ou pouvant être associée au deuxième élément tubulaire (3) connecté ou pouvant être connecté axialement au premier élément tubulaire (2), au moins un premier élément d'engagement positif (7) étant disposé ou réalisé au niveau de la première partie de dispositif d'accouplement (5) et au moins un deuxième élément d'engagement positif (8), correspondant notamment à l'au moins un premier élément d'engagement positif (7), étant disposé ou réalisé au niveau de la deuxième partie de dispositif d'accouplement (6), l'au moins un premier élément d'engagement positif (7) disposé ou réalisé au niveau de la première partie de dispositif d'accouplement (5) et l'au moins un deuxième élément d'engagement positif (8) disposé ou réalisé au niveau de la deuxième partie de dispositif d'accouplement (6) étant réalisés pour coopérer par engagement positif en réalisant une connexion axiale de la première partie de dispositif d'accouplement (5) avec la deuxième partie de dispositif d'accouplement (6), une connexion axiale des parties de dispositif d'accouplement respectives (5, 6) étant garantie dans chaque cas par la coopération par engagement positif du premier et du deuxième élément d'engagement positif respectifs (7, 8),
les éléments d'engagement positif correspondants (7, 8) étant réalisés non seulement pour coopérer par engagement positif en réalisant une connexion axiale de la ou d'une première partie de dispositif d'accouplement (5) avec la deuxième partie de dispositif d'accouplement (6), mais étant également réalisés pour coopérer en réalisant un guidage déplaçable dans la direction radiale de la première partie de dispositif d'accouplement (5) et de la deuxième partie de dispositif d'accouplement (6) l'une par rapport à l'autre,
au moins un premier élément de guidage (26) étant disposé ou réalisé au niveau de la première partie de dispositif d'accouplement (5) et au moins un deuxième élément de guidage (27), correspondant notamment à l'au moins un premier élément de guidage (26), étant disposé ou réalisé au niveau de la deuxième partie de dispositif d'accouplement (6), l'au moins un premier élément de guidage (26) disposé ou réalisé au niveau de la première partie de dispositif d'accouplement (5) et l'au moins un deuxième élément de guidage (27) disposé ou
réalisé au niveau de la deuxième partie de dispositif d'accouplement (6) étant réalisés de manière à coopérer en réalisant un guidage déplaçable dans la direction radiale de la première partie de dispositif d'accouplement (5) et de la deuxième partie de dispositif d'accouplement (6) l'une par rapport à l'autre, une variation ciblée du diamètre intérieur de la première partie de dispositif d'accouplement (5) ou de la deuxième partie de dispositif d'accouplement (6) étant possible par des déplacements radiaux correspondants de la première partie de dispositif d'accouplement (5) par rapport à la deuxième partie de dispositif d'accouplement (6), ou inversement.

2. Dispositif selon la revendication 1, **caractérisé en ce que** la première partie de dispositif d'accouplement (5) est réalisée sous forme segmentée sur la périphérie, la première partie de dispositif d'accouplement (5) étant formée de plusieurs premiers segments de partie de dispositif d'accouplement (13) connectés ou pouvant être connectés dans la direction périphérique à la première partie de dispositif d'accouplement (5), et/ou la deuxième partie de dispositif d'accouplement (6) étant réalisée sous forme segmentée sur la périphérie, la deuxième partie de dispositif d'accouplement (6) étant formée de plusieurs deuxièmes segments de partie de dispositif d'accouplement (14) connectés ou pouvant être connectés dans la direction périphérique à la deuxième partie de dispositif d'accouplement (6).

3. Dispositif selon la revendication 2, **caractérisé en ce qu'**un premier segment de partie de dispositif d'accouplement (13) présente au moins une portion de base (15) en forme de nervure, au moins un premier élément d'engagement positif (7) étant disposé ou réalisé au niveau d'une première extrémité libre axiale ou dans la région d'une première extrémité libre axiale de la portion de base (15) en forme de nervure,
et/ou
un deuxième segment de partie de dispositif d'accouplement (6) présente au moins une portion de base (15) en forme de nervure, au moins un deuxième élément d'engagement positif (8) étant disposé ou réalisé au niveau d'une première extrémité libre axiale ou dans la région d'une première extrémité libre axiale de la portion de base (15) en forme de nervure.

4. Dispositif selon la revendication 3, **caractérisé en ce qu'**un premier segment de partie de dispositif d'accouplement (13) présente plusieurs portions de base (15) en forme de nervures, disposées de manière à s'étendre parallèlement ou suivant un certain angle l'une par rapport à l'autre, deux portions de base (15) en forme de nervures, disposées directement à côté l'une de l'autre, étant connectées l'une à l'autre au niveau de la première extrémité libre axiale ou dans la région de la première extrémité libre axiale par le biais d'une portion de connexion (16), en particulier dans la direction périphérique, au moins un premier élément d'engagement positif (7) étant disposé ou réalisé au niveau de la portion de connexion (16), et/ou un deuxième segment de partie de dispositif d'accouplement (14) présente plusieurs portions de base (15) en forme de nervures, disposées de manière à s'étendre parallèlement ou suivant un certain angle l'une par rapport à l'autre, deux portions de base (15) en forme de nervures, disposées directement l'une à côté de l'autre, étant connectées l'une à l'autre au niveau de la première extrémité libre ou axiale dans la région de la première extrémité libre axiale par le biais d'une portion de connexion (16), en particulier dans la direction périphérique, au moins un deuxième élément d'engagement positif (8) étant disposé ou réalisé au niveau de la portion de connexion (16).

5. Dispositif selon la revendication 4, **caractérisé en ce qu'**au moins deux portions de base (15) en forme de nervures, disposées directement l'une à côté de l'autre dans la direction périphérique, d'un premier segment de partie de dispositif d'accouplement (5), sont connectées l'une à l'autre au niveau de, ou dans la région de, leurs deuxièmes extrémités libres axiales opposées à leurs premières extrémités libres axiales respectives par le biais d'un élément de connexion (18), notamment de forme courbe, en particulier dans la direction périphérique, et/ou au moins deux portions de base (15) en forme de nervures, disposées directement l'une à côté de l'autre dans la direction périphérique, d'un deuxième segment de partie de dispositif d'accouplement (14), sont connectées l'une à l'autre au niveau de, ou dans la région de, leurs deuxièmes extrémités libres axiales opposées à leurs premières extrémités libres axiales respectives par le biais d'un élément de connexion (18), notamment de forme courbe, en particulier dans la direction périphérique.

6. Dispositif selon l'une quelconque des revendications 2 à 5, **caractérisé en ce qu'**au niveau, ou dans la région, de la première extrémité libre axiale de l'au moins une portion de base (15) d'au moins un premier segment de partie de dispositif d'accouplement (13), est réalisée une première portion de retenue (19) en forme de patte rehaussée radialement par rapport à la portion de base (15), et au niveau, ou dans la région, d'une deuxième extrémité libre axiale opposée à la première extrémité libre axiale, de l'au moins une portion de base (15) de l'au moins un premier segment de partie de dispositif d'accouplement (13), est réalisée une deuxième portion de retenue en forme de patte (20) rehaussée radialement par rapport à la portion de base (15), une région de fixation (21) pour fixer une partie d'un élément de serrage (22) serrant la première partie de dispositif d'accouplement (5), en particulier dans la direction périphérique, étant réalisée par l'au moins une première portion de retenue en forme de patte (19) et l'au moins une deuxième portion de retenue (20) en forme de patte, et/ou
au niveau, ou dans la région, de la première extrémité libre axiale de l'au moins une portion de base (15) de l'au moins un deuxième segment de partie de dispositif d'accouplement (14) est réalisée une première portion de retenue (19) en forme de patte rehaussée radialement par rapport à la portion de base (159 et au niveau, ou dans la région d'une deuxième extrémité libre axiale opposée à la première extrémité libre axiale, de l'au moins une portion de base (15) de l'au moins un deuxième segment de partie de dispositif d'accouplement (14), est réalisée une deuxième portion de retenue (20) en forme de patte rehaussée radialement par rapport à la portion de base (15), une région de fixation (21) étant réalisée par l'au moins une première portion de retenue en forme de patte (19) et l'au moins une deuxième portion de retenue en forme de patte (20), pour fixer une partie d'un élément de serrage (22) serrant la deuxième partie de dispositif d'accouplement (6), en particulier dans la direction périphérique.

7. Dispositif selon la revendication 6, **caractérisé en ce qu'**au niveau d'au moins une première portion de retenue en forme de patte (19), en particulier au niveau de deux premières portions de retenue en forme de patte (19) disposées l'une à côté de l'autre dans la direction périphérique, d'un premier segment de partie de dispositif d'accouplement (13), est disposé ou réalisé au moins un élément de montée (23) faisant saillie dans la direction périphérique, lequel, dans l'état de montage du dispositif (1), peut être serré ou est serré dans la direction périphérique contre une portion de la deuxième partie de dispositif d'accouplement (6) opposée à celui-ci, et/ou au niveau d'au moins une première portion de retenue en forme de patte (19), en particulier au niveau de deux premières portions de retenue en forme de patte (19) disposées l'une à côté de l'autre dans la direction périphérique, d'un deuxième segment de partie de dispositif d'accouplement (14), est disposé ou réalisé au moins un élément de montée (23) faisant saillie dans la direction périphérique, lequel, dans l'état de montage du dispositif (1), peut être serré ou est serré dans la direction périphérique contre une portion de la première partie de dispositif d'accouplement (5) opposée à celui-ci.

8. Dispositif selon la revendication 7, **caractérisé en ce qu'**au moins un élément de montée (23) d'un premier segment de partie de dispositif d'accouplement (13) est disposé ou réalisé dans la région d'un premier élément d'engagement positif (7) formant un logement pour un deuxième élément d'engagement positif (8) antagoniste, et/ou au moins un élément de montée (23) d'un deuxième segment de partie de dispositif d'accouplement (14) est disposé ou réalisé dans la région d'un deuxième élément d'engagement positif (8) formant un logement pour un premier élément d'engagement positif (7) antagoniste.

9. Dispositif selon l'une quelconque des revendications 2 à 8, **caractérisé en ce qu'**au niveau d'au moins une portion de base (15) en forme de nervure d'un premier segment de partie de dispositif d'accouplement (13) est disposé ou réalisé un élément de connexion (24, 25) pour la connexion sur la périphérie du premier segment de partie de dispositif d'accouplement (13) à un élément de connexion (24, 25), en particulier correspondant, d'un autre premier segment de partie de dispositif d'accouplement (13), et/ou au niveau d'au moins une portion de base (15) en forme de nervure d'un deuxième segment de partie de dispositif d'accouplement (14), est disposé ou réalisé un élément de connexion (24, 25) pour la connexion sur la périphérie du deuxième segment de partie de dispositif d'accouplement (14) à un élément de connexion (24, 25), en particulier correspondant, d'un deuxième segment de partie de dispositif d'accouplement supplémentaire (14).

10. Dispositif selon la revendication 9, **caractérisé en ce qu'**un élément de connexion (24) est réalisé sous forme de saillie d'encliquetage radiale, en particulier en forme de tourillon, et un élément de connexion (25), en particulier correspondant, est réalisé sous forme de logement d'encliquetage, notamment de type orifice, pour la saillie d'encliquetage.

11. Dispositif selon l'une quelconque des revendications 2 à 10, **caractérisé en ce que** les premiers segments de partie de dispositif d'accouplement (13) et les deuxièmes segments de partie de dispositif d'accouplement (14) sont réalisés sous forme identique.

12. Dispositif selon l'une quelconque des revendications précédentes, **caractérisé en ce qu'**un premier élément d'engagement positif (7) est une portion (9) en saillie, réalisée notamment avec une extrémité libre en contre-dépouille, de préférence en forme de tête de champignon ou une portion de réception (10) pour une telle portion (9) en saillie, ou une portion faisant saillie dans la direction périphérique depuis la première partie de dispositif d'accouplement (5) ou depuis un premier segment de partie de dispositif d'accouplement (13), de manière à chevaucher, sur la périphérie, une portion, notamment correspondante, faisant saillie dans la direction périphérique, de la deuxième partie de dispositif d'accouplement (6) ou d'un deuxième segment de partie de dispositif d'accouplement (14), et un deuxième élément d'engagement positif (6) est une portion (11) en saillie, réalisée notamment avec une extrémité libre en contre-dépouille, de préférence en forme de tête de champignon ou une portion de réception (12) pour une telle portion (11) en saillie, ou une portion faisant saillie dans la direction périphérique depuis la deuxième partie de dispositif d'accouplement (6) ou depuis un deuxième segment de partie de dispositif d'accouplement (14), de manière à chevaucher, sur la périphérie, une portion, notamment correspondante, faisant saillie dans la direction périphérique, de la première partie de dispositif d'accouplement (5) ou d'un premier segment de partie de dispositif d'accouplement (13).

13. Dispositif selon l'une quelconque des revendications 2 à 12, **caractérisé en ce qu'**au niveau d'au moins un premier segment de partie de dispositif d'accouplement (13) est disposé ou réalisé au moins un premier élément de guidage (26) et au niveau d'au moins un deuxième segment de partie de dispositif d'accouplement (14) est disposé ou réalisé au moins un deuxième élément de guidage (27) correspondant notamment à l'au moins un premier élément de guidage (26), l'au moins un premier élément de guidage (26) disposé ou réalisé au niveau d'au moins un premier segment de partie de dispositif d'accouplement (13) et l'au moins deuxième élément de guidage (27) disposé ou réalisé au niveau d'au moins un deuxième segment de partie de dispositif d'accouplement (14) étant réalisés de manière à coopérer en réalisant un guidage déplaçable dans la direction radiale l'un par rapport à l'autre d'au moins un premier segment de partie de dispositif d'accouplement (13) et d'au moins un deuxième segment de partie de dispositif d'accouplement (14).

14. Dispositif selon l'une quelconque des revendications précédentes, **caractérisé en ce que** la première partie de dispositif d'accouplement (5) et la deuxième partie de dispositif d'accouplement (6) sont connectées directement l'une à l'autre dans la direction axiale ou indirectement en interposant au moins une partie de connexion intermédiaire (28).

15. Dispositif selon la revendication 14, **caractérisé en ce qu'**une partie de connexion intermédiaire correspondante (28) présente au moins un élément d'engagement positif (29, 30, 40) pour la connexion à un premier élément d'engagement positif (7) de la première partie de dispositif d'accouplement (5) et au moins un élément d'engagement positif (29, 30, 40) pour la connexion à un deuxième élément d'engagement positif (8) de la deuxième partie de dispositif d'accouplement (6), ou au moins un élément d'engagement positif (29, 30, 40) pour la connexion à un premier élément d'engagement positif (7) de la première partie de dispositif d'accouplement (5) ou pour la connexion à un deuxième élément d'engagement positif (8) de la deuxième partie de dispositif d'accouplement (6) et au moins un élément d'engagement positif (41) pour la connexion à une partie de connexion intermédiaire supplémentaire (28).

16. Dispositif selon la revendication 14 ou 15, **caractérisé en ce qu'**au moins deux parties de connexion intermédiaires (28) disposées de manière adjacente dans la direction périphérique sont connectées l'une à l'autre par le biais d'au moins un élément de connexion (33) les reliant dans la direction périphérique, en particulier en forme de bande ou de type bande.

17. Dispositif selon l'une quelconque des revendications 14 à 16, **caractérisé en ce qu'**au niveau d'au moins une partie de connexion intermédiaire (28) est disposé ou réalisé au moins un élément de montée (23) faisant saillie dans la direction périphérique, lequel, dans l'état de montage du dispositif (1), peut être serré ou est serré dans la direction périphérique contre une portion opposée à celui-ci d'une partie de dispositif d'accouplement (5, 6).
